# EUROPEAN PATENT SPECIFICATION

(11) **EP 3 228 511 B1**
(45) Date of publication and mention of the grant of the patent: **14.10.2020**
(21) Application number: 17000545.8
(22) Date of filing: 31.03.2017
(51) Int. Cl.: B60T 8/1755

(54) **DRIVER ASSISTANCE APPARATUS FOR A MOTOR VEHICLE**
FAHRERASSISTENZVORRICHTUNG FÜR EIN KRAFTFAHRZEUG
APPAREIL D'ASSISTANCE AU CONDUCTEUR POUR VÉHICULE AUTOMOBILE

(30) Priority: 07.04.2016 KR 20160042970
(43) Date of publication of application: 11.10.2017
(73) Proprietor: LG Electronics Inc., Yeongdeungpo-Gu Seoul 07336 (KR)
(72) Inventor: LEE, Jinkyo, 07336 Seoul (KR)
(74) Representative: Beyer, Andreas

(56) References cited:
- EP-A1- 1 674 359
- EP-A2- 1 602 557
- DE-A1-102009 058 147
- GB-A- 2 394 702
- US-A1- 2015 203 109
- US-A1- 2015 321 668

## Description

### TECHNICAL FIELD

The present invention relates to an apparatus included in a vehicle.

### BACKGROUND

A vehicle is a machine moved by a user who rides therein. An example of a vehicle is a car. For convenience of vehicle users, some vehicles include sensors and electronic devices. For example, some vehicles may include an advanced driver assistance system (ADAS) that provides driver convenience functions. Furthermore, autonomous vehicles are under development that perform some operations of a vehicle without a user's active control.

EP 1 602 557 A2 relates to an evaluation of a deviation of a vehicle from a lane and an evaluation of a necessary steering support including calculating a target torque necessary for returning the vehicle to the inside of the lane based on a steering wheel angle, vehicle speed and brake indication.

### SUMMARY

Systems and techniques are disclosed herein that enable a driver assistance apparatus to, during a braking operation of a vehicle, maintain the vehicle within a lane in which the vehicle is travelling.

According to the invention a driver assistance apparatus for a vehicle includes a camera configured to photograph an image of surroundings of a vehicle; an interface; and a processor. The processor is configured to detect, based on the image photographed by the camera, a lane in which the vehicle travels; acquire braking state information of the vehicle; and provide, to a steering apparatus, a signal for steering the vehicle or provide, to a brake apparatus, a signal for one-sided braking through the interface to maintain the vehicle within the lane in which the vehicle travels during a braking of the vehicle based on the acquired braking state information. The processor is further configured to acquire distance information regarding a distance between the vehicle and an object ahead of the vehicle that is located within the lane in which the vehicle travels; provide the signal for steering to the steering apparatus or provide the signal for one-sided braking to the brake apparatus based on the acquired distance information; provide the signal for one-sided braking to the brake apparatus based on a determination that the distance between the vehicle and the object ahead of the vehicle exceeds a threshold distance; and provide the signal for steering to the steering apparatus based on a determination that the distance between the vehicle and the object ahead of the vehicle is less than the threshold distance.

In some implementations, the processor may be configured to acquire the braking state information based on the image of the surroundings of the vehicle or based on receiving the braking state information through the interface.

In some implementations, the processor may be further configured to determine a degree of swerving of the vehicle from the lane in which the vehicle travels; acquire position information of the vehicle, the position information corresponding to the degree of swerving of the vehicle from the lane in which the vehicle travels; and provide the signal for steering or the signal for one-sided braking based on the acquired position information of the vehicle.

In some implementations, the processor may be configured to calculate the position information of the vehicle by determining an angle between the left line or the right line of the lane in which the vehicle travels; determining a heading of the vehicle; and calculating the position information of the vehicle based on the angle between the heading of the vehicle and the left line or the right line of the lane in which the vehicle travels.

In some implementations, the processor may be further configured to determine a virtual centerline of the lane in which the vehicle travels; determine a line corresponding to a center of the width of the vehicle; determine an angle between the virtual centerline of the lane in which the vehicle travels and a line corresponding to a center of a width of the vehicle; and calculate the position information of the vehicle based on the angle between the virtual centerline of the lane in which the vehicle travels and the line corresponding to the center of the width of the vehicle.

In some implementations, the processor may be configured to determine whether the degree of swerving of the vehicle from the lane in which the vehicle travels is less than a threshold value; and based on a determination that the degree of swerving of the vehicle from the lane in which the vehicle travels is less than the threshold value, provide the signal for one-sided braking to the brake apparatus.

In some implementations, the processor may be configured to determine whether the degree of swerving of the vehicle from the lane in which the vehicle travels exceeds a threshold value; and based on a determination that the degree of swerving of the vehicle from the lane in which the vehicle travels exceeds the threshold value, provide the signal for steering to the steering apparatus.

In some implementations, the processor may be further configured to acquire information about a speed of the vehicle; and provide the signal for steering to the steering apparatus or provide the signal for one-sided braking to the brake apparatus based on the acquired speed information.

In some implementations, the processor may be configured to provide the signal for steering to the steering apparatus based on a determination that the speed of the vehicle exceeds a threshold speed; and provide the signal for one-sided braking to the brake apparatus based on a determination that the speed of the vehicle is less than the threshold speed.

In some implementations, the processor may be further configured to acquire information regarding a time to collision (TTC) with an object ahead of the vehicle that is located within the lane in which the vehicle travels; and provide the signal for steering to the steering apparatus or provide the signal for one-sided braking to the brake apparatus based on the acquired information regarding the TTC.

In some implementations, the processor may be further configured to provide the signal for one-sided braking to the brake apparatus based on a determination that the TTC exceeds the threshold time; and provide the signal for steering to the steering apparatus based on a determination that the TTC is less than the threshold time.

In some implementations, the processor may be further configured to receive, from a tire pressure monitoring system (TPMS) and through the interface, tire pressure information of the vehicle; and provide the signal for one-sided braking to the brake apparatus based on the received tire pressure information of the vehicle.

In some implementations, the processor may be further configured to determine whether an air pressure of a first tire on a first wheel of the vehicle is less than an air pressure of a second tire on a second wheel of the vehicle; and based on a determination that the air pressure of the first tire on the first wheel of the vehicle is less than the air pressure of the second tire on the second wheel of the vehicle, provide the signal for one-sided braking to the brake apparatus such that a braking power applied to the first wheel of the vehicle is less than a braking power applied to the second wheel of the vehicle.

In some implementations, the processor may be further configured to acquire information regarding a curve of the lane in which the vehicle travels; and provide the signal for steering to the steering apparatus or provide the signal for one-sided braking to the brake apparatus based on the acquired information regarding the curve of the lane in which the vehicle travels.

In some implementations, the processor may be further configured to acquire information regarding a curvature of the curve of the lane in which the vehicle travels; determine whether the curvature of the curve exceeds a threshold curvature; and based on a determination that the curvature of the curve exceeds the threshold curvature, provide both the signal for steering to the steering apparatus and the signal for one-sided braking to the brake apparatus.

In some implementations, the processor may be further configured to acquire information regarding a curvature of the curve of the lane in which the vehicle travels; determine whether the curvature of the curve is less than a threshold curvature; and based on a determination that the curvature of the curve is less than the threshold curvature, provide the signal for steering to the steering apparatus.

In some implementations, the processor may be further configured to determine a virtual centerline of the lane in which the vehicle travels; and provide the signal for steering to the steering apparatus or the signal for one-sided braking to the brake apparatus such that a center of a width of the vehicle corresponds to the virtual centerline of the lane in which the vehicle travels.

In some implementations, the processor may be further configured to determine whether a driver intervention event has occurred; and based on a determination that the driver intervention event has occurred, stop a supply of the signal for steering to the steering apparatus or stop a supply of the signal for one-sided braking to the brake apparatus.

### BRIEF DESCRIPTION OF THE DRAWINGS

FIG. 1 is a diagram illustrating an example of an exterior of a vehicle according to an implementation;
FIG. 2 is a block diagram of an example of a vehicle according to an implementation;
FIG. 3A is a diagram illustrating a perspective view of an example of a vehicle camera according to an implementation;
FIG. 3B is a diagram illustrating an exploded perspective view of an example of a vehicle camera according to an implementation;
FIG. 3C is a diagram illustrating a cross-sectional view of an example of a vehicle camera according to an implementation, taken along line A-B of FIG. 3A;
FIG. 3D is a diagram illustrating a perspective view of an example of a vehicle camera according to an implementation;
FIG. 3E is a diagram illustrating an exploded perspective view of a vehicle camera according to an implementation;
FIG. 3F is a diagram illustrating a cross-sectional view of an example of a vehicle camera according to an implementation, taken along line C-D of FIG. 3D;
FIG. 4A is a block diagram of an example of a driver assistance apparatus according to an implementation;
FIG. 4B is a diagram illustrating an example of a processor and signal processing of components of the driver assistance apparatus according to an implementation;
FIGS. 5A and 5B are diagrams illustrating examples of an image processor of FIG. 4B;
FIGS. 5C and 5D are diagrams illustrating examples of operations of the processor shown in FIGS. 5A and 5B;
FIGS. 5E and 5F are diagrams illustrating examples of operations of the driver assistance apparatus shown in FIGS. 5A to 5C;
FIG. 6 is a flowchart illustrating an example of operations of a driver assistance apparatus according to an implementation;
FIG. 7A is a diagram illustrating a bird's eye view of an example of a vehicle according to an implementation;
FIG. 7B is a diagram illustrating a front view image of an example of a vehicle, photographed through a vehicle camera, in the situation of FIG. 7A according to an implementation;
FIG. 8A is a diagram illustrating an example of a situation in which a vehicle swerves to the left during braking according to an implementation;
FIG. 8B is a diagram illustrating a front view image of an example of a vehicle, photographed through a vehicle camera, in the situation of FIG. 8A according to an implementation;
FIG. 9A is a diagram illustrating an example of a situation in which a vehicle swerves to the right during braking according to an implementation;
FIG. 9B is a diagram illustrating a front view image of an example of a vehicle, photographed through a vehicle camera, in the situation of FIG. 9A according to an implementation;
FIG. 10 is a diagram illustrating an example of a vehicle steering system according to an implementation;
FIG. 11 is a diagram illustrating an example of a vehicle brake system according to an implementation;
FIG. 12 is a flowchart illustrating an example of operations of a driver assistance apparatus according to an implementation;
FIG. 13 is a diagram illustrating an example of operations of the driver assistance apparatus shown in FIG. 12 according to an implementation;
FIG. 14 is a flowchart illustrating an example of operations of a driver assistance apparatus according to an implementation;
FIGS. 15 and 16 are diagrams illustrating examples of operations of the driver assistance apparatus shown in FIG. 14 according to an implementation;
FIG. 17 is a flowchart illustrating an example of operations of a driver assistance apparatus according to an implementation;
FIGS. 18 and 19 are diagrams illustrating examples of operations of the driver assistance apparatus shown in FIG. 17 according to an implementation;
FIG. 20 is a flowchart illustrating an example of operations of a driver assistance apparatus according to an implementation;
FIGS. 21 and 22 are diagrams illustrating examples of operations of the driver assistance apparatus shown in FIG. 20 according to an implementation;
FIG. 23 is a diagram illustrating an example of operations of a driver assistance apparatus based on tire pressure according to an implementation;
FIG. 24 is a flowchart illustrating an example of operations of a driver assistance apparatus according to an implementation;
FIGS. 25 and 26 are diagrams illustrating examples of operations of the driver assistance apparatus shown in FIG. 24.

### DETAILED DESCRIPTION

In the event of a sudden braking operation of a vehicle, the vehicle's direction of motion may unexpectedly change despite a user's steering input not having been applied to the vehicle. When the vehicle deviates from a lane due to an unexpected change of direction of the vehicle, an accident may be more likely to occur.

A driver assistance apparatus is described herein that, during a braking operation of a vehicle, automatically maintains the vehicle within a lane in which the vehicle is travelling.

Such a driver assistance apparatus may have one or more of the following advantages.

Firstly, a vehicle may be controlled to come to a stop within the lane in which the vehicle travels by applying one-sided braking and steering control according to a situation during the braking operation. One-sided braking may include controlling the vehicle's brakes such that that braking power is applied differently to different wheels of the vehicle.

Secondly, accidents occurring when a vehicle deviates from a lane in which the vehicle travels may be prevented.

Thirdly, one-sided braking control may be performed when the vehicle considerably deviates from the lane to prevent injury to the driver caused by steering wheel rotation according to sudden steering.

Fourthly, position stability of a vehicle may be achieved by appropriately using one-sided braking control and steering control based on factors such as the speed of the vehicle, a distance between the vehicle and an object, time to collision (TTC), tire pressure, and driving around a curve.

Effects of a driver assistance apparatus disclosed herein are not limited to the above-described effects and other effects which are not described herein will become apparent to those skilled in the art from the following description.

A vehicle described in the specification may include a car and a motorcycle. The car is described as the vehicle in the following.

The vehicle described in the specification may include an internal combustion engine vehicle having an engine as a power source, a hybrid vehicle having an engine and an electric motor as a power source, an electric vehicle having an electric motor as a power source, or any suitable source of power.

In the following description, the left side of a vehicle refers to the left side of a driving direction of the vehicle and the right side of the vehicle refers to the right side of the driving direction of the vehicle.

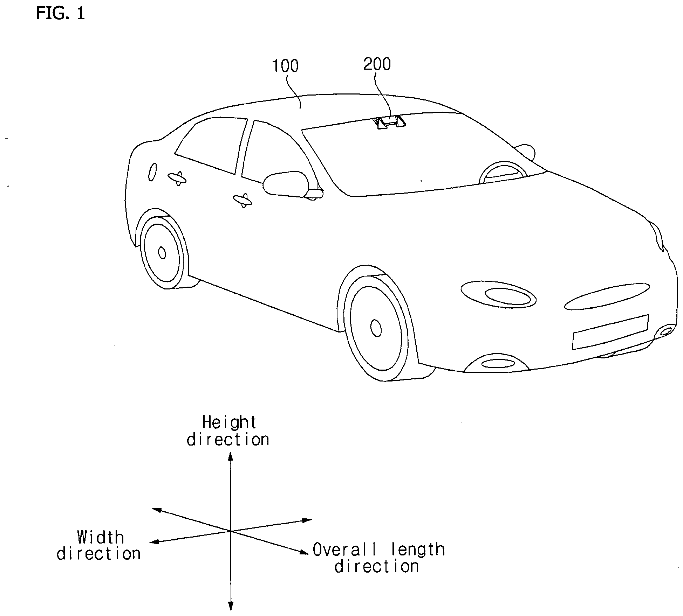

FIG. 1 shows the exterior of a vehicle 100 according to an implementation.

As shown, the vehicle 100 may include wheels rotating by a power source and a steering device for steering the vehicle 100.

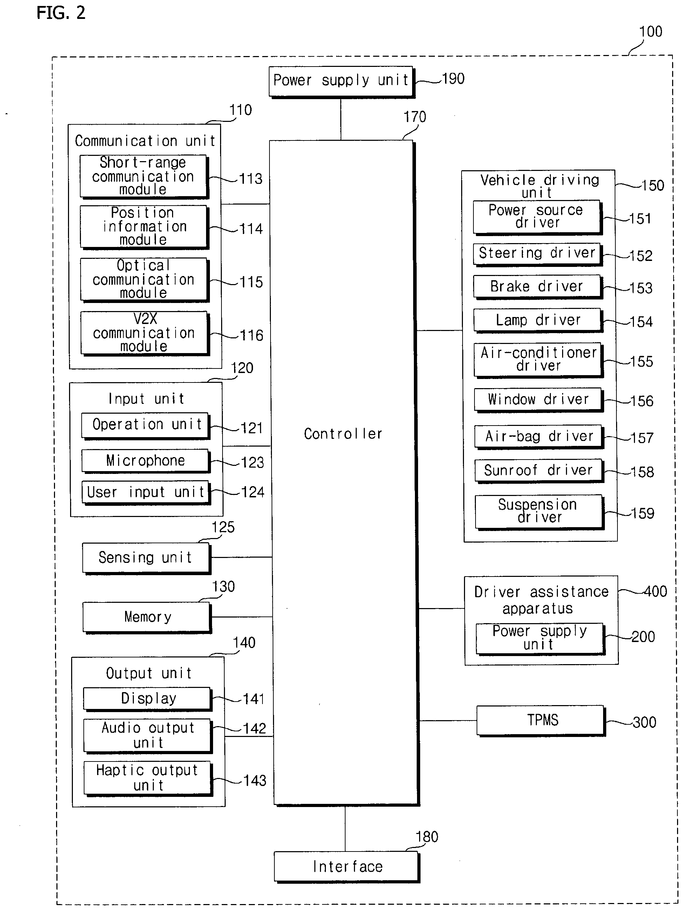

According to one implementation, the vehicle 100 may be an autonomous vehicle. An autonomous vehicle may be switched to an autonomous driving mode or a manual mode according to user input. In the manual mode, the autonomous vehicle 100 may receive user input for driving through an operation unit (121 of FIG. 2).

The vehicle 100 may include a driver assistance apparatus 400. The driver assistance apparatus 400 assists the driver of the vehicle based on information acquired through various sensors. The driver assistance apparatus 400 may be referred to as an advanced driver assistance system (ADAS).

While a vehicle camera 200 is described as a sensor used for the driver assistance apparatus 400 in the following description, implementations are not limited thereto. According to one implementation, a radar, lidar, ultrasonic sensor, infrared sensor and the like may be used as sensors for the driver assistance apparatus 400 in addition to the vehicle camera 200.

In addition, a mono camera 200a and a stereo camera 200b are described as the camera 200 for use in the driver assistance apparatus 400 in the following. However, implementations are not limited thereto. According to one implementation, the vehicle camera 200 may include a triple camera, an around view monitoring (AVM) camera, a 360° camera and an omnidirectional camera.

While FIG. 1 shows that the vehicle camera 200 used in the driver assistance apparatus 400 is provided to a windshield of the vehicle such that the vehicle camera 200 may capture a front view image of the vehicle 100, the vehicle camera 200 may capture a front view image, a rear view image, a right side image and a left side image of the vehicle. Accordingly, the vehicle camera 200 may be provided to an appropriate position outside or inside the vehicle.

The overall length refers to the length between the front part and the rear part of the vehicle 100, width refers to the width of the vehicle 100 and height refers to the distance between the lower part of the wheel and the roof of the vehicle 100. In the following description, an overall length direction L may refer to a direction in which the overall length of the vehicle 100 is measured, a width direction W may refer to a direction in which the width of the vehicle 100 is measured, and a height direction H may refer to a direction in which the height of the vehicle 100 is measured.

FIG. 2 is a block diagram of the vehicle according to an implementation.

Referring to FIG. 2, the vehicle 100 may include a communication unit 110, an input unit 120, a sensing unit 125, a memory 130, an output unit 140, a vehicle driving unit 150, a controller 170, an interface 180, a power supply unit 190, a tire pressure monitoring system (TPMS) 300 and the driver assistance apparatus 400.

The communication unit 110 may include a short-range communication module 113, a position information module 114, an optical communication module 115 and a V2X communication module 116.

The communication unit 110 may include one or more radio frequency (RF) circuits or devices for communication with other devices.

The short-range communication module 113 is a module for short range communication and may support short range communication using at least one of Bluetooth™, RFID (Radio Frequency Identification), Infrared Data Association (IrDA), UWB (Ultra-Wideband), ZigBee, NFC (Near Field Communication), Wi-Fi (Wireless-Fidelity), Wi-Fi Direct and Wireless USB (Wireless Universal Serial Bus).

The short-range communication module 113 may perform short-range communication between the vehicle 100 and at least one external device by establishing wireless area networks. For example, the short-range communication module 113 may wirelessly exchange data with a mobile terminal. The short-range communication module 113 may receive weather information and traffic information (e.g., transport protocol experts group (TPEG) information) from a mobile terminal. When a user enters the vehicle 100, a mobile terminal of the user and the vehicle 100 may be paired automatically or according to execution of an application by the user.

The position information module 114 is a module for locating the vehicle 100 and a typical example thereof is a GPS (Global Positioning System) module. For example, the vehicle may acquire the location thereof using signals sent from a GPS satellite using the GPS module.

According to one implementation, the position information module 114 may be a component included in the sensing unit 125 instead of the communication unit 110.

The optical communication module 115 may include a light transmission unit and a light receiving unit.

The light receiving unit converts a light signal into an electrical signal so as to receive information. The light receiving unit may include a photodiode (PD) for receiving light. The photodiode converts light into an electrical signal. For example, the light receiving unit may receive information on a preceding vehicle through light emitted from a light source included in the preceding vehicle.

The light transmission unit may include at least one light-emitting element for converting an electrical signal into a light signal. Here, the light-emitting element may be an LED (Light Emitting Diode). The light transmission unit converts an electrical signal into a light signal and emits the light signal. For example, the light transmission unit may emit a light signal through flickering of the light-emitting element, which corresponds to a predetermined frequency. According to one implementation, the light transmission unit may include a plurality of light-emitting element arrays. According to one implementation, the light transmission unit may be integrated with a lamp provided to the vehicle 100. For example, the light transmission unit may be at least one of a headlight, a taillight, a brake light, a turn signal lamp and a sidelight. For example, the optical transmission module 115 may exchange data with another vehicle through optical communication.

The V2X communication module 116 is a module for wireless communication between the vehicle 100 and a server or other vehicles. The V2X communication module 116 includes a module in which a vehicle-to-vehicle communication (V2V) or vehicle-to-infrastructure communication (V2I) protocol may be implemented. The vehicle 100 may perform wireless communication with an external server or other vehicles through the V2X communication module 116.

The input unit 120 may include an operation unit 121, a microphone 123 and a user input unit 124.

The operation unit 121 receives user input for driving the vehicle 100. The operation unit 121 may include a steering input unit, a shift input unit, an acceleration input unit and a brake input unit.

The user applies steering input to the steering input unit. The steering input unit may be configured as a steering wheel such that steering input according to rotation may be applied. According to one implementation, the steering input unit may be configured in the form of a touchscreen, a touch pad or a button.

The user applies inputs with respect to park (P), drive (D), neutral (N), and reverse (R) of the vehicle 100 through the shift input unit. The shift input unit may be configured in the form of a lever. According to one implementation, the shift input unit may be configured in the form of a touchscreen, a touch pad or a button.

The user applies input with respect to acceleration of the vehicle 100 through the acceleration input unit. The user applies input with respect to reduction of the speed of the vehicle 100 to the brake input unit. The acceleration input unit and the brake input unit may be configured in the form of a pedal. According to one implementation, the acceleration input unit or the brake input unit may be configured in the form of a touchscreen, a touch pad or a button.

The microphone 123 may process an external audio signal into electrical data. The processed data may be used in various manners according to functions executed in the vehicle 100. The microphone 123 may convert a voice command of the user into electrical data. The converted electrical data may be transmitted to the controller 170.

According to one implementation, the camera 122 or the microphone 123 may be included in the sensing unit 125 instead of the input unit 120.

The user input unit 124 is used to receive information from the user. Upon input of information through the user input unit 124, the controller 170 may control operation of the vehicle 100 to respond to the input information. The user input unit 124 may include a touch type input unit or a mechanical input unit. According to one implementation, the user input unit 124 may be provided to a region of the steering wheel of the vehicle. In this case, the driver may operate the user input unit 124 with a finger while gripping the steering wheel.

The sensing unit 125 senses states of the vehicle 100 or external states of the vehicle 100. To this end, the sensing unit 125 may include a collision sensor, a wheel sensor, a speed sensor, a tilt sensor, a weight sensor, a heading sensor, a yaw sensor, a gyro sensor, a position module, a front side/rear side sensor, a battery sensor, a fuel sensor, a tire sensor, a steering sensor, a vehicle internal temperature sensor, a vehicle internal humidity sensor, an ultrasonic sensor, an illumination sensor, an acceleration pedal position sensor, a brake pedal position sensor and the like.

Accordingly, the sensing unit 125 may acquire sensing signals with respect to vehicle collision information, vehicle direction information, vehicle position information (GPS information), heading information, speed information, acceleration information, vehicle inclination information, driving/reverse information, battery information, fuel information, tire information, vehicle lamp information, vehicle internal temperature information, vehicle internal humidity information, steering wheel rotation angle information, external illumination, pressure applied to the acceleration pedal, pressure applied to the brake pedal and the like.

In addition, the sensing unit 125 may further include an acceleration pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS) and the like.

The position information module 114 may be classified as a component of the sensing unit 125.

The sensing unit 125 may include an object sensor for sensing an object around the vehicle. The object sensor may include a camera module, a radar, a lidar and an ultrasonic sensor. In this case, the sensing unit 125 may sense an object in front of the vehicle or an object behind the vehicle through the camera module, radar, lidar or ultrasonic sensor.

According to one implementation, the object sensor may be classified as a component of the driver assistance apparatus 400.

The memory 130 is electrically connected to the controller 170. The memory 130 may store fundamental data about the units, control data for operation control of the units and input/output data. The memory 130 may be various types of storage devices such as a ROM, a RAM, an EPROM, a flash drive and a hard drive. The memory 130 may store various types of data for the overall operation of the vehicle 100, such as programs for processing or control.

The output unit 140 outputs information processed by the controller 170 and may include a display 141, an audio output unit 142 and a haptic output unit 143.

The display 141 may display various graphical objects. For example, the display 141 may display vehicle related information. The vehicle related information may include vehicle control information for direct control of the vehicle or vehicle driving assistance information for providing driving guidance to the vehicle driver. In addition, the vehicle related information may include vehicle state information indicating the current state of the vehicle or vehicle driving information related to driving of the vehicle.

The display 141 may include at least one of a liquid crystal display (LCD), a thin film transistor-liquid crystal display (TFT LCD), an organic light emitting diode (OLED), a flexible display, a 3D display and an e-ink display.

The display 141 may implement a touchscreen by forming a layered structure with a touch sensor or by being integrated with the touch sensor. Such touchscreen may function as the user input unit that provides an input interface between the vehicle 100 and the user and, simultaneously, provide an output interface between the vehicle 100 and the user. In this case, the display 141 may include a touch sensor for sensing touch applied to the display 141 such that a control command is input to the display 141 through touch. When touch is applied to the display 141, the touch sensor may sense the touch and the controller 170 may generate a control command corresponding to the touch based on the sensed touch. Input applied through touch may be text, figures or menu items that may be indicated or designated in various modes.

The display 141 may include a cluster to enable the driver to drive the vehicle and, simultaneously, to check vehicle state information or vehicle driving information. The cluster may be provided on the dashboard. In this case, the driver may check information displayed on the cluster while looking forward.

According to one implementation, the display 141 may be implemented as an HUD (Head Up Display). When the display 141 is implemented as an HUD, information may be output through a transparent display provided to the windshield of the vehicle. Alternatively, the display 141 may include a projection module so as to output information through an image projected to the windshield.

According to one implementation, the display 141 may include a transparent display. In this case, the transparent display may be attached to the windshield.

The transparent display may display a predetermined screen with predetermined transparency. For transparency, the transparent display may include at least one of a transparent TFEL (Thin Film Electroluminescent) display, a transparent OLED (Organic Light-Emitting Diode) display, a transparent LCD (Liquid Crystal Display), a transmission type transparent display and a transparent LED (Light Emitting Diode) display. The transparency of the transparent display may be controlled.

According to one implementation, the display 141 may function as a navigation system.

The audio output unit 142 converts an electrical signal from the controller 170 into an audio signal and outputs the audio signal. To this end, the audio output unit 142 may include a speaker. The audio output unit 142 may output sound corresponding to operation of the user input unit 124.

The haptic output unit 143 generates haptic output. For example, the haptic output unit 143 may vibrate the steering wheel, a safety belt or a seat to enable the user to recognize haptic output.

The vehicle-driving unit 150 may control operations of various devices of the vehicle. The vehicle-driving unit 150 may include a power source driver 151, a steering driver 152, a brake driver 153, a lamp driver 154, an air-conditioner driver 155, a window driver 156, an airbag driver 157, a sunroof driver 158, and a suspension driver 159.

The power source driver 151 may perform electronic control of a power source of the vehicle 100.

For example, when the power source is a fossil fuel based engine, the power source driver 151 may perform electronic control of the engine so as to control the output torque of the engine. When the power source driver 151 is an engine, the speed of the vehicle may be limited by restricting an engine output torque under the control of the controller 170.

Alternatively, when an electric motor is a power source, the power source driver 151 may control the motor. Accordingly, revolutions per minute (RPM), torque and the like of the motor may be controlled.

The steering driver 152 may electronically control a steering apparatus of the vehicle 100 so as to steer the vehicle 100.

The brake driver 153 may electronically control a brake apparatus of the vehicle 100. For example, the brake driver 153 may reduce the speed of the vehicle 100 by controlling the operation of a brake provided to the wheels. As another example, the brake driver 153 may adjust the direction of the vehicle 100 to the left or right by differently operating brakes respectively provided to the left and right wheels.

The lamp driver 154 may turn on/turn off lamps provided to the inside and outside of the vehicle 100. In addition, the lamp driver 154 may control illuminance, directions and the like of the lamps. For example, the lamp driver 154 may control the turn signal, brake lamp and the like.

The air-conditioner driver 155 may electronically control an air conditioner of the vehicle 100. For example, the air-conditioner driver 155 may control the air conditioner to supply chilly air to the inside of the vehicle 100 when the internal temperature of the vehicle is high.

The window driver 156 may electronically control a window apparatus of the vehicle 100. For example, the window driver 156 may control opening or closing of left and right windows provided to the side of the vehicle.

The airbag driver 157 may electronically control an airbag apparatus provided to the inside of the vehicle 100. For example, the airbag driver 157 may control the airbag apparatus to operate in a dangerous situation.

The sunroof driver 158 may electronically control a sunroof apparatus of the vehicle 100. For example, the sunroof driver 158 may control opening or closing of a sunroof.

The suspension driver 159 may electronically control a suspension apparatus of the vehicle 100. For example, the suspension driver 159 may reduce vibration of the vehicle 100 by controlling the suspension apparatus when the surface of the road is rough.

According to one implementation, the vehicle-driving unit 150 may include a chassis driver. The chassis driver may include the steering driver 152, brake driver 153 and suspension driver 169.

The controller 170 may control operations of the respective units of the vehicle 100. The controller 170 may be called an ECU (Electronic Control Unit).

The controller 170 may be implemented using at least one of ASICs (application specific integrated circuits), DSPs (digital signal processors), DSPDs (digital signal processing devices), PLDs (programmable logic devices), FPGAs (field programmable gate arrays), processors, controllers, microcontrollers, microprocessors and other electrical units for executing the corresponding functions.

The interface 180 may serve as a passage between the vehicle 100 and various external devices connected to the vehicle 100. For example, the interface 180 may include a port connectable to a mobile terminal and may be connected to the mobile terminal through the port. In this case, the interface 180 may exchange data with the mobile terminal.

The interface 180 may serve as a passage through which electric energy is supplied to the mobile terminal connected thereto. When the mobile terminal is electrically connected to the interface 180, the interface 180 may provide electric energy supplied from the power supply unit 190 to the mobile terminal under the control of the controller 170.

The power supply unit 190 may provide power that is used for operations of the components of the vehicle 100 under the control of the controller 170. The power supply unit 190 may be provided with power from a battery included in the vehicle.

The TPMS 300 may sense air pressure of each tire of the vehicle 100. The TPMS 300 includes an air pressure sensor. The air pressure sensor may sense air pressure inside each tire. The TPMS 300 may further include a temperature sensor. The temperature sensor may sense the internal temperature of each tire.

The TPMS 300 may output the air pressure or temperature of each tire. The TPMS 300 may provide a signal to the display 141 and the display 141 may output the air pressure or temperature of each tire.

The driver assistance apparatus 400 may assist driving of the vehicle by the driver. The driver assistance apparatus 400 may include the vehicle camera 200.

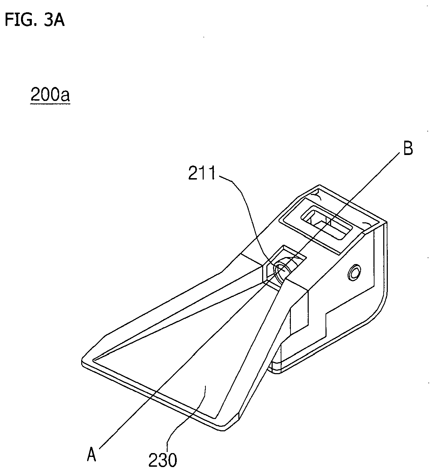

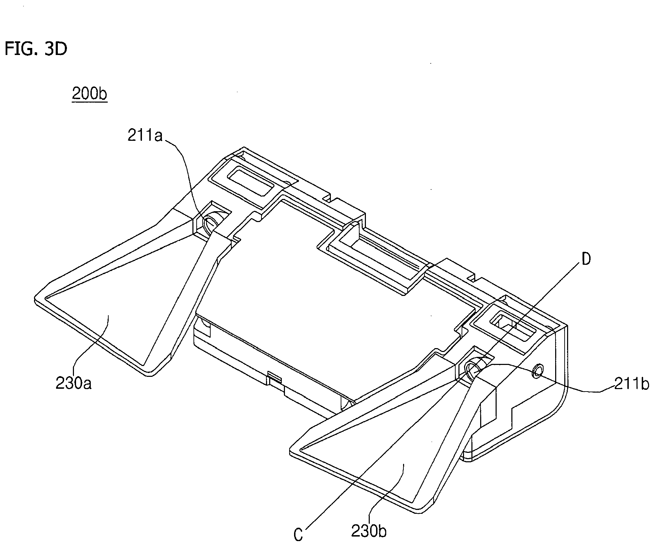

The vehicle camera 200 may include the mono camera 200a shown in FIGS. 3A to 3C and the stereo camera 200b shown in FIGS. 3D to 3F.

The vehicle camera 200 may be called a vehicle camera device.

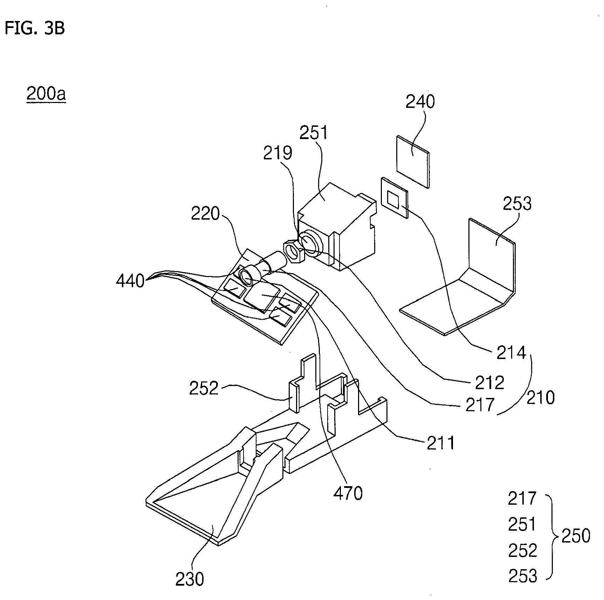

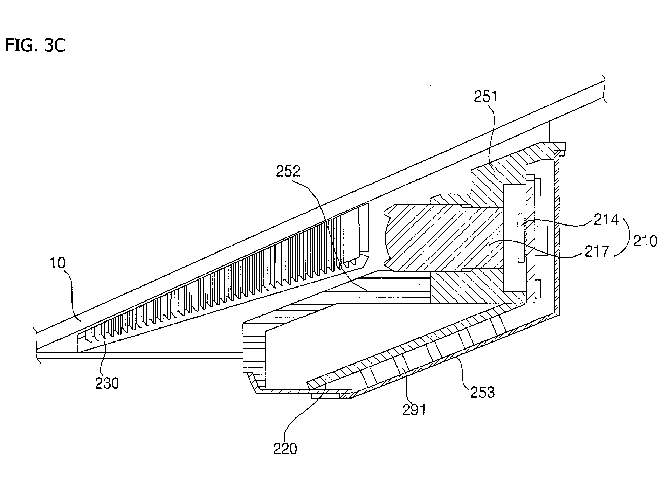

FIG. 3A is a perspective view of a vehicle camera according to an implementation. FIG. 3B is an exploded perspective view of the vehicle camera according to an implementation. FIG. 3C is a cross-sectional view of the vehicle camera according to an implementation, taken along line A-B of FIG. 3A.

The vehicle camera 200 described with reference to FIGS. 3A to 3C is a single camera 200a.

The vehicle camera 200a may include a lens 211, an image sensor 214 and a processor 470.

According to one implementation, the vehicle camera 200a may further include a processing board 220, a light shield 230, a heat-radiating member 240 and a housing 250, or a combination thereof.

The housing 250 may include a first housing 251, a second housing 252 and a third housing 253.

The lens 211 is accommodated in a lens housing 217 and coupled to the first housing 251 by being fitted in a hole 219 formed in a region of the first housing 251 through a nut 212.

The image sensor 214 may include at least one photoelectric conversion device for converting an optical signal into an electrical signal. For example, the image sensor 214 may be a charge-coupled device (CCD) or a complimentary metal-oxide semiconductor (CMOS).

The image sensor 214 may be provided to an appropriate region outside or inside the vehicle in order to acquire an image of surroundings or inside of the vehicle.

For example, the image sensor 214 may be disposed in proximity to a front windshield 10 inside the vehicle in order to acquire a front view image of the vehicle. The image sensor 214 may be provided around a front bumper or a radiator grille.

For example, the image sensor 214 may be provided in proximity to a rear windshield inside the vehicle in order to obtain a rear view image of the vehicle. The image sensor 214 may be provided around a rear bumper, a trunk or a tailgate.

For example, the image sensor 214 may be provided in proximity to at least one side window inside the vehicle in order to acquire a side view image of the vehicle. The image sensor 214 may be provided around a side mirror, a fender or a door.

The image sensor 214 may be disposed behind the lens 211 to acquire an image based on light input through the lens 211. For example, the image sensor 214 may be disposed perpendicular to the ground having a predetermined distance from the lens 211.

The processor 470 may be electrically connected to the image sensor 214. The processor 470 may process an image acquired through the image sensor 214. The processor 470 may control the image sensor 214.

The processor 470 may be implemented using at least one of ASICs (application specific integrated circuits), DSPs (digital signal processors), DSPDs (digital signal processing devices), PLDs (programmable logic devices), FPGAs (field programmable gate arrays), processors, controllers, microcontrollers, microprocessors, and other electrical units for executing the corresponding functions.

The processor 470 may be mounted on the processing board 220.

The processing board 220 may have the processor 270 and a memory 440 mounted thereon.

The processing board 220 may be inclined in the overall length direction. For example, the processing board 220 may be disposed such that the front side or rear side thereof faces the front windshield 10. For example, the processing board 220 may be arranged in parallel with the front windshield 10.

The front windshield 10 included in the vehicle 100 is formed at a predetermined angle to the ground from the bonnet to the roof of the vehicle 100. In this case, since the processing board 220 is inclined in the overall length direction, the vehicle camera 200a may be smaller than when the processing board 220 is disposed vertically or horizontally. Accordingly, a space corresponding to the reduced volume of the vehicle camera 200a in the vehicle 100 may be secured.

The processing board 220 may have a plurality of elements or electronic components mounted thereon. Here, the plurality of elements or components mounted on the processing board 220 may generate heat.

The processing board 220 may be disposed having a distance from the image sensor 214 such that heat generated from the processing board 220 does not affect the performance of the image sensor 214.

The processing board 220 may be disposed at an optimum position such that heat generated from the processing board 220 does not affect the image sensor 214.

Specifically, the processing board 220 may be provided under the image sensor 214. The processing board 220 may be provided in front of the image sensor 214.

One or more memories 440 may be mounted on the processing board 220. The memory 440 may store images acquired through the image sensor 214, application data, data for control of the processor 470 and data processed by the processor 470. The memory 440 is a heat-generating element like the processor 470. The memory 440 may be provided around the processor 470 disposed at the center of the processing board 220. For example, one or more memories 440 may be arranged to surround the processor 470. In this case, the processor 470 and the memory 440, which are heat-generating elements, may be farthest from the image sensor 214.

The processor 470 may be electrically connected to the controller 170 such that the processor 470 may be controlled by the controller 170.

The light shield 230 may be provided in front of the lens 211. The light shield 230 may shield light that is unnecessary to acquire an image such that the light is not input to the lens 211. For example, the light shield 230 may shield light reflected from the windshield 10 or the dashboard of the vehicle. In addition, the light shield 230 may shield unnecessary light.

The light shield 230 may be configured as a screen. For example, the light shield 230 may be formed as a bottom screen.

The shape of the light shield 230 may be varied according to vehicle model. For example, the light shield 230 may have a shape corresponding to the model of the vehicle to which the vehicle camera 200a is attached since the curvature of the windshield and the angle between the windshield and the ground depend on the vehicle model. To this end, the light shield 230 may be configured to be attachable to/detachable from the vehicle camera 200a.

The heat-radiating member 240 may be provided behind the image sensor 214. The heat-radiating member 240 may come into contact with the image sensor 214 or an image sensor board on which the image sensor 214 is mounted. The heat-radiating member 240 may dissipate heat generated by the image sensor 214.

As described above, the image sensor 241 is sensitive to heat. The heat-radiating member 240 may be arranged between the image sensor 214 and the third housing 253. The heat-radiating member 240 may be disposed such that the image sensor 214 and the third housing 253 come into contact with each other. In this case, the heat-radiating member 240 may emit heat through the third housing 253.

For example, the heat-radiating member 240 may be one of a thermal pad and thermal grease.

The housing 250 may include the lens housing 217, the first housing 251, the second housing 252 and the third housing 253.

The lens housing 217 may accommodate at least one lens 211 and protect the lens 211 from external impact.

The first housing 251 may be formed to surround the image sensor 214. The first housing 251 may include the hole 219. The lens 211 may be fitted in the hole 219 while being accommodated in the lens housing and connected to the image sensor 214.

The first housing 251 may become thicker with decreasing distance to the image sensor 214. For example, the first housing 251 may be formed through die-casting. In this case, the portion of the first housing 251, close to the image sensor 214, may be thicker than other portions in order to prevent performance deterioration of the image sensor 214 due to heat.

The first housing 251 may be thicker than the third housing 253. In the case of a thick housing, heat transfer is slow. Accordingly, when the first housing 251 is thicker than the third housing 253, heat generated inside the vehicle camera 200a is radiated through the third housing 253 rather than the first housing 251 that is disposed in proximity to the front windshield 10 and thus has difficulty in heat radiation.

In one implementation, the lens housing 217 and the first housing 251 may be i nteg rated.

The second housing 252 may be provided in front of the processing board 220. The second housing 252 may be coupled to the first housing 251 and the third housing 253 through a predetermined coupling.

The second housing 252 may include an attachment for attaching the light shield 230 thereto. The light shield 230 may be attached to the second housing 252 through the attachment.

The first and second housings 252 and 253 may be made of a plastic material.

The third housing 253 may be coupled to the first housing 251 and the second housing 252 through a predetermined coupling. In an implementation, the first, second and third housings 251, 252 and 253 may be integrated.

The third housing 253 may be formed to surround the processing board 220. The third housing 253 may be provided behind or under the processing board 220. The third housing 253 may be formed of a thermally conductive material. For example, the third housing 253 may be made of a metal such as aluminum. When the third housing 253 is made of a thermally conductive material, efficient heat radiation may be achieved.

When the first and second housings 251 and 252 are formed of a plastic material and the third housing 253 is formed of a thermally conductive material, heat generated inside the vehicle camera 200a may be radiated through the third housing 253 rather than the first and second housings 251 and 252. That is, when the vehicle camera 200a is attached to the windshield, heat may not be emitted through the first and second housings 251 and 252 since the first and second housings 251 and 252 are provided in proximity to the windshield. In this case, heat may be efficiently emitted through the third housing 253.

When the third housing 253 is made of aluminum, the third housing 253 may protect components (e.g. the image sensor 214 and the processor 470) included in the vehicle camera 200a from EMC (electromagnetic compatibility) and ESD (electrostatic discharge).

The third housing 253 may come into contact with the processing board 220. In this case, the third housing 253 may transfer heat through a contact portion between the third housing 253 and the processing board 220 to efficiently emit heat.

The third housing 253 may further include a heat-radiating part 291. For example, the heat-radiating part 291 may include at least one of a heat sink, a radiation fin, a thermal pad and thermal grease.

The heat-radiating part 291 may emit heat generated by the vehicle camera 200a. For example, the heat-radiating part 291 may be arranged between the processing board 220 and the third housing 253. The heat-radiating part 291 may emit heat generated from the processing board 220 by contacting the processing board 220 and the third housing 253.

The third housing 253 may further include an air hole for emitting hot air inside the vehicle camera 200a to the outside of the vehicle camera 200a. An airflow part connected to the air hole may be included in the vehicle camera 200a. The airflow part may guide hot air inside the vehicle camera 200a to the air hole.

The vehicle camera 200a may further include a moisture-proof part. The moisture-proof part may take the form of a patch and may be attached to an air exhaust part. The moisture-proof part may be a moisture-proof member made of Gore-Tex. The moisture-proof part may emit moisture inside the vehicle camera 200a to the outside. In addition, the moisture-proof part may prevent external moisture from being introduced into the vehicle camera 200a.

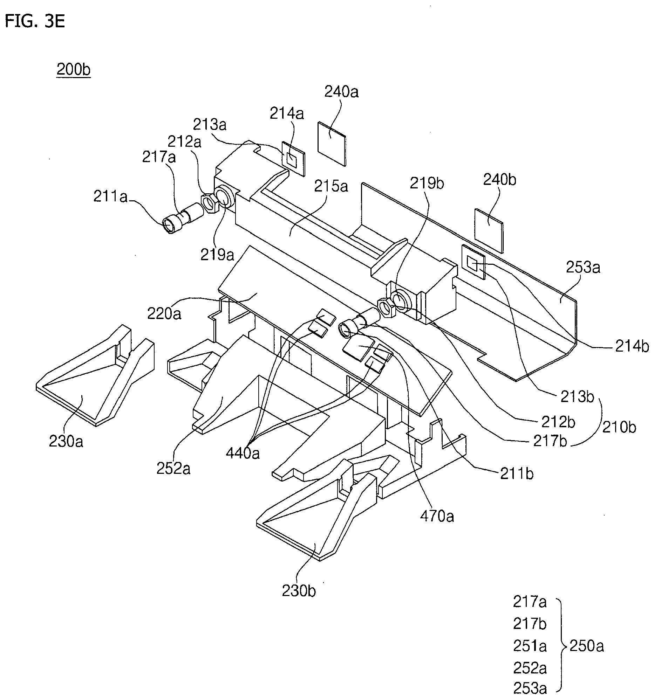

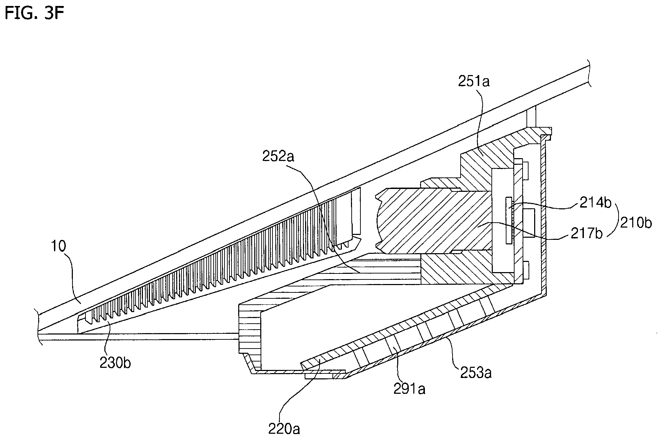

FIG. 3D is a perspective view of a vehicle camera according to an implementation. FIG. 3E is an exploded perspective view of the vehicle camera according to an implementation. FIG. 3F is a cross-sectional view of the vehicle camera according to an implementation, taken along line C-D of FIG. 3D.

The vehicle camera 200 described with reference to FIGS. 3D to 3F is a stereo camera 200b.

Description of the single camera 200a aforementioned with reference to FIGS. 3A to 3C may be equally applied to the stereo camera 200b. That is, each of first and second cameras included in the stereo camera 200b may be the camera described with reference to FIGS. 3A to 3C.

The stereo camera 200b may include a first lens 211a, a second lens 211b, a first image sensor 214a, a second image sensor 214b and a processor 470a.

In an implementation, the vehicle camera 200b may further include a processing board 220a, a first light shield 230a, a second light shield 230b and a housing 250a, or a combination thereof.

The housing may include a first lens housing 217a, a second lens housing 217b, a first housing 251a, a second housing 252a and a third housing 253a.

Description of the lens 211 with reference to FIGS. 3A to 3C may be applied to the first lens 211a and the second lens 211b.

Description of the first image sensor 214a and the second image sensor 214b with reference to FIGS. 3A to 3C may be applied to the first and second image sensors 214a and 214b.

A module including the first lens 211a and the first image sensor 214a may be called a first image acquisition module. A module including the second lens 211b and the second image sensor 214b may be called a second image acquisition module.

The processor 470a may be electrically connected to the first image sensor 214a and the second image sensor 214b. The processor 470a may process images acquired through the first and second image sensors 214a and 214b. Here, the processor 470a may generate a disparity map or perform disparity calculation on the basis of images acquired through the first and second image sensors 214a and 214b.

The processor 470a may be implemented using at least one of ASICs (application specific integrated circuits), DSPs (digital signal processors), DSPDs (digital signal processing devices), PLDs (programmable logic devices), FPGAs (field programmable gate arrays), processors, controllers, micro-controllers, microprocessors, and other electrical units for executing the corresponding functions.

The processor 470 may be mounted on the processing board 220a.

Description of the processing board 220 with reference to FIGS. 3A to 3C may be applied to the processing board 220a.

Description of the light shield 230 with reference to FIGS. 3A to 3C may be applied to the first light shield 230a and the second light shield 230b.

Description of the lens housing 217 with reference to FIGS. 3A to 3C may be applied to the first lens housing 217a and the second lens housing 217b.

Description of the first housing 251 with reference to FIGS. 3A to 3C may be applied to the first housing 251a.

Description of the second housing 252 with reference to FIGS. 3A to 3C may be applied to the second housing 252a.

Description of the third housing 253 with reference to FIGS. 3A to 3C may be applied to the third housing 253a.

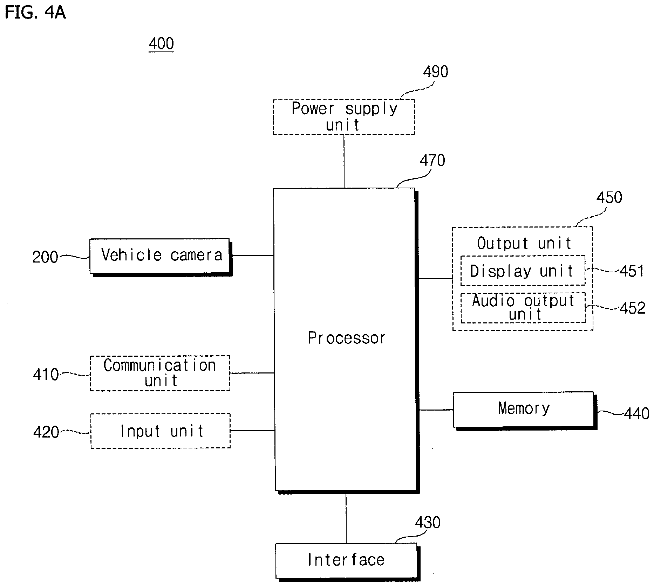

FIG. 4A is a block diagram of the driver assistance apparatus according to an implementation.

Referring to FIG. 4A, the driver assistance apparatus 400 may include the vehicle camera 200, a processor 470, an interface 430 and a memory 440.

According to one implementation, the driver assistance apparatus 400 may further include a communication unit 410, an input unit 420, an output unit 450 and a power supply unit 490, or a combination thereof.

According to one implementation, the processor 470, the interface 430 and the memory 440 may be components of the camera 200. In this case, the vehicle camera device 200 may function as the driver assistance apparatus 400.

The vehicle camera 200 is attached to a portion of the vehicle 100 to acquire an image.

For example, the vehicle camera 200 may be disposed in proximity to the front windshield 10 inside the vehicle in order to acquire a front view image of the vehicle. The vehicle camera 200 may be provided around the front bumper or the radiator grille of the vehicle.

For example, the vehicle camera 200 may be provided in proximity to the rear windshield inside the vehicle in order to obtain a rear view image of the vehicle. The vehicle camera 200 may be provided around the rear bumper, the trunk or the tailgate.

For example, the vehicle camera 200 may be provided in proximity to at least one side window inside the vehicle in order to acquire a side view image of the vehicle. The vehicle camera 200 may be provided around a side mirror, the fender or a door.

The vehicle camera 200 may include the image sensor 214 and an actuator 401.

The image sensor 214 has been described with reference to FIGS. 3A to 3F.

According to one implementation, the vehicle camera 200 may be a stereo camera (200b of FIGS. 3D to 3F).

When the vehicle camera 200 is the stereo camera 200b, the vehicle camera 200 may include the first camera, the second camera and the processor 470.

The interface 430 may receive signals, information or data. The interface 430 may transmit signals, information or data processed or generated in the processor 470 to the outside.

To this end, the interface may perform data communication with the controller 170, the display 141, the sensing unit 125 and the vehicle-driving unit 150 of the vehicle through a wired or wireless communication scheme.

The interface 430 may receive information about air pressure of each tire from the TPMS 300.

The interface 430 may receive sensor information from the controller 170 or the sensing unit 125.

Here, the sensor information may include at least one of vehicle direction information, vehicle position information (GPS information), vehicle heading information, vehicle speed information, vehicle steering information, vehicle acceleration information, vehicle inclination information, information on forward/reverse movement of the vehicle, battery information, fuel information, tire information, vehicle lamp information (e.g. turn signal information), vehicle internal temperature information, vehicle internal humidity information and information about rainfall.

Such sensor information may be acquired from a heading sensor, a yaw sensor, a gyro sensor, a position module, a vehicle front/rear sensor, a wheel sensor, a speed sensor, a steering angle sensor, a car body tilting sensor, a battery sensor, a fuel sensor, a tire sensor, a steering sensor, a vehicle internal temperature sensor, a vehicle internal humidity sensor and a rain sensor. The position module may include a GPS module for receiving GPS information.

The interface 430 may receive navigation information through data communication with the controller 170, the display 141 a separate navigation system. The navigation information may include information on a set destination, route information depending on the destination, map information related to driving of the vehicle, and information on the current position of the vehicle. In addition, the navigation information may include information on the position of the vehicle on a road.

The interface 430 may provide a signal to the controller 170 or the vehicle-driving unit 150. Here, the signal may be a control signal.

For example, the interface 430 may communicate with the power source driver 151 for controlling a power source. The interface 430 may provide a signal generated in the processor 470 to the power source driver 151.

For example, the interface 430 may communicate with the brake driver 153 for controlling a brake apparatus. The interface 430 may provide a signal generated in the processor 470 to the brake driver 153.

For example, the interface 430 may communicate with the steering driver 152 for controlling a steering apparatus. The interface 430 may provide a signal generated in the processor 470 to the steering driver 152.

The memory 440 may store various types of data for overall operation of the driver assistance apparatus 400, such as a program for processing or control of the processor 470.

The memory 440 may be a storage device such as a ROM, a RAM, an EEPROM, a flash drive and a hard drive. According to one implementation, the memory 440 may be included in the processor 470 as a component thereof.

The processor 470 may be electrically connected to each unit of the driver assistance apparatus 400.

The processor 470 may control overall operation of each unit of the driver assistance apparatus 400.

The processor 470 may receive an image of surroundings of the vehicle, captured by the vehicle camera 200. The processor 470 may detect a lane from the received image.

The processor 470 may acquire information about a braking state of the vehicle 100.

The processor 470 may acquire braking state information of the vehicle 100 based on the received image. For example, the processor 470 may obtain braking state information of the vehicle 100 based on whether relative speed of the vehicle with respect to a fixed object (e.g. a tree, streetlight, traffic sign or traffic lamp) decreases.

The processor 470 may receive braking state information of the vehicle 100 from the operation unit 121, the brake driver 153, a brake apparatus 153a or the controller 170 through the interface 430.

The braking state information may be full braking state information. Alternatively, the braking state information may be information about braking state corresponding to 80% or higher of full braking. Alternatively, the braking state information may be information about braking state corresponding to 80% to 100% of full braking.

In a braking state of the vehicle 100, straightness of braking may be lost due to one-sided wear of each tire, air pressure deviation of each tire, a road state, a brake pad state and the like. In this case, the vehicle 100 may be controlled to be braked within a lane in which the vehicle 100 travels through steering control or one-sided braking control to prevent accidents.

The processor 470 may provide a signal for controlling the vehicle 100 to be braked within the lane during braking of the vehicle 100.

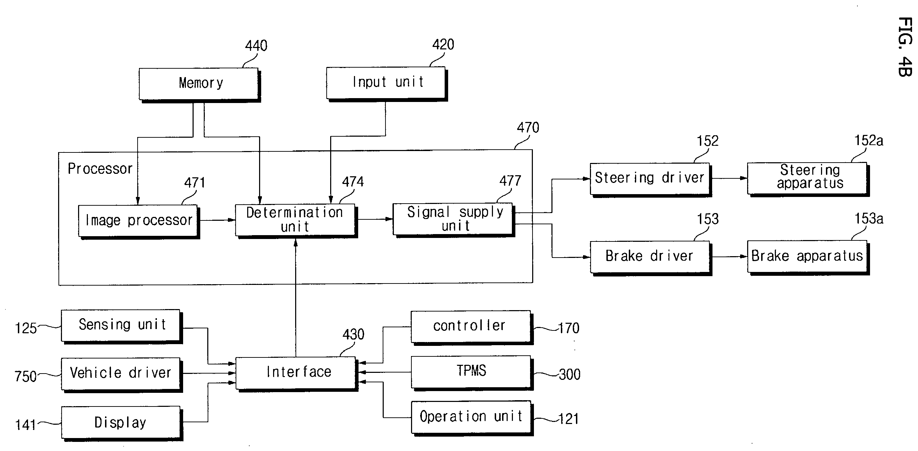

For example, the processor 470 may provide a signal for steering the vehicle to a steering apparatus (152a of FIG. 4B) through the interface 430 such that the vehicle 100 is braked within the lane in which the vehicle 100 travels.

For example, the processor 470 may provide a signal for one-side braking to the brake apparatus (153a of FIG. 4B) through the interface 430 such that the vehicle 100 is braked within the lane.

In this manner, the vehicle 100 may be controlled to be braked within the lane during braking of the vehicle, thereby preventing accidents that may occur when the vehicle deviates from a lane. Particularly, collision between the vehicle and a guardrail may be prevented.

The processor 470 may obtain position information of the vehicle. The processor 470 may provide a signal for steering or a signal for one-sided braking based on the position information. Here, the position information may correspond to a degree of swerving of vehicle direction from a lane in which the vehicle travels.

For example, the processor 470 may calculate position information of the vehicle based on the angle between the left line or the right line of the lane and the vehicle direction.

For example, the processor 470 may generate a virtual centerline of the lane and calculate position information of the vehicle based on the angle between the virtual centerline and the centerline of the width of the vehicle. Here, the virtual centerline refers to a virtual centerline between the left line and the right line of the lane.

The processor 470 may receive the position information of the vehicle from the sensing unit 125 through the interface 430. For example, the processor 470 may receive the position information of the vehicle from a heading sensor of the sensing unit 125.

When a degree of swerving of the vehicle exceeds a reference value, the processor 470 may provide a signal for one-sided braking to the brake apparatus 153a.

The processor 470 may provide a signal for one-sided braking to the brake apparatus 153a such that heading of the vehicle 100 is aligned with the lane.

To adjust heading of the vehicle 100, movement or steering of the vehicle by a degree of swerving in the opposite direction, which corresponds to the degree of swerving of the vehicle, is needed. If the vehicle 100 largely swerves, large steering is performed by the system while the driver grips the steering wheel. Accordingly, the driver may be injured due to rotation of the steering wheel. In this case, it is possible to protect the driver from injury by correcting heading of the vehicle using one-sided braking.

When the degree of swerving is less than the reference value, the processor 470 may provide a signal for steering to the steering apparatus 152a.

The processor 470 may provide a signal for steering to the steering apparatus 152a such that the heading of the vehicle 100 is aligned with the lane.

To adjust heading of the vehicle 100, movement or steering of the vehicle by a degree of swerving in the opposite direction, which corresponds to the degree of swerving of the vehicle, is needed. If the vehicle 100 slightly swerves, the driver is not injured even when steering is performed by the system while the driver grips the steering wheel. In this case, it is possible to prevent loss of braking power by correcting heading of the vehicle through steering.

The reference value corresponds to the angle between the lane in which the vehicle 100 travels and heading of the vehicle in operation of correcting heading of the vehicle 100 and may be determined by experimentation. The reference value may be prestored in the memory 440.

Heading of the vehicle may be a direction of the centerline of the width of the vehicle. Heading of the vehicle may correspond to a direction in which the vehicle travels.

The processor 470 may acquire vehicle speed information.

The processor 470 may acquire speed information of the vehicle 100 based on the received image. For example, the processor 470 may obtain speed information of the vehicle 100 based on a distance between the vehicle and a fixed object (e.g. a tree, streetlight, traffic sign or traffic lamp) with time. When a speed sensor of the vehicle 100 is out of order, the processor 470 may acquire speed information of the vehicle 100 based on the received image.

The processor 470 may receive speed information of the vehicle 100 from the sensing unit 125 or the controller 170 through the interface 430.

The processor 470 may provide a signal for steering to the steering apparatus 152a through the interface 430 based on the speed information. The processor 470 may provide a signal for one-sided braking to the brake apparatus 153a through the interface 430 based on the speed information.

When the speed of the vehicle 100 exceeds a reference speed, the processor 470 may provide a signal for steering the vehicle to the steering apparatus 152a.

When the speed of the vehicle 100 is lower than the reference speed, the processor 470 may provide a signal for one-sided braking to the brake apparatus 153a.

In general, a degree of steering according to rotational displacement of the steering wheel corresponds to speed. Specifically, for the same degree of steering, rotational displacement of the steering wheel at a low speed is larger than rotational displacement of the steering wheel at a high speed. Conversely, for the same degree of steering, rotational displacement of the steering wheel at a high speed is smaller than rotational displacement of the steering wheel at a low speed.

That is, heading of the vehicle may be corrected through one-sided braking at a low speed to protect the driver from injury.

In addition, heading of the vehicle may be corrected through steering at a high speed to prevent loss of braking power. Particularly, greater effect of preventing loss of braking power is obtained at high speed than at low speed.

The processor 470 may change control of heading of the vehicle 100 from one-sided braking to steering based on the reference speed.

The reference speed is a speed value corresponding to a criterion for selecting one-sided braking or steering in operation of controlling heading of the vehicle 100 and may be determined by experimentation. The reference speed may be prestored in the memory 440.

The processor 470 may acquire information about a distance between the vehicle and an object located within the lane.

The processor 470 may calculate the distance between the vehicle and the object based on the received image.

The processor 470 may calculate the distance based on an object size variation with time in the image.

The processor 470 may calculate the distance between the lens 211 and the object based on the focal distance of the lens 211 and the distance between the lens 211 and the image sensor 214. In this case, a Gaussian function may be used. The distance between the vehicle 100 and the object may be the distance between the lens 211 and the object.

The processor 470 may calculate the distance based on the position of the object on the road surface in the image. The processor 470 may calculate the distance by counting the number of pixels occupied by the road surface.

When the vehicle camera 200 includes the stereo camera 200b, the processor 470 may calculate the distance between the vehicle and the object according to disparity calculation.

The processor 470 may provide a signal for steering to the steering apparatus 152a through the interface 430 based on the distance between the vehicle and the object. The processor 470 may provide a signal for one-sided braking to the brake apparatus 153a through the interface 430 based on the distance between the vehicle and the object.

When the distance between the vehicle and the object exceeds a reference distance, the processor 470 may provide a signal for one-sided braking to the brake apparatus 153a.

When the vehicle is not close to the object, risk of collision with the object is low. In this case, heading of the vehicle 100 may be controlled according to one-sided braking in consideration of damage applied to the driver while gripping the steering wheel rather than risk of collision with the object.

The processor 470 may provide a signal for steering to the steering apparatus 152a when the distance between the vehicle and the object is less than the reference distance.

When the vehicle is close to the object, risk of collision with the object is high. In this case, heading of the vehicle 100 may be controlled according to steering in consideration of damage due to collision with the object rather than damage applied to the driver when gripping the steering wheel. That is, collision with the object may be avoided by maintaining braking power.

The reference distance corresponds to a distance between the vehicle and the object, which is a criterion for selecting one-sided braking or steering in operation of controlling heading of the vehicle 100, and may be determined by experimentation. The reference distance may be prestored in the memory 440.

The processor 470 may acquire information about time to collision (TTC) with an object located within the lane in which the vehicle 100 travels.

The processor 470 may calculate TTC with the object based on the distance between the vehicle and the object and relative speed of the vehicle with respect to the object. The relative speed with respect to the object may be calculated based on the distance between the vehicle 100 and the object, and the speed of the vehicle 100.

The processor 470 may provide a signal for steering to the steering apparatus 152a through the interface 430 based on the TTC with the object. The processor 470 may provide a signal for one-sided braking to the brake apparatus 153a through the interface 430 based on the TTC with the object.

When the TTC with the object exceeds a reference time, the processor 470 may provide a signal for one-sided braking to the brake apparatus 153a.

When the TTC with the object is sufficient, risk of collision with the object is low. In this case, heading of the vehicle 100 may be controlled according to one-sided braking in consideration of damage to be applied to the driver gripping the steering wheel rather than risk of collision with the object.

When the TTC with the object is shorter than the reference time, the processor 470 may provide a signal for steering to the steering apparatus 152a.

When the TTC with the object is not sufficient, risk of collision with the object is high. In this case, heading of the vehicle 100 may be controlled according to steering in consideration of damage due to collision with the object rather than damage applied to the driver gripping the steering wheel. That is, collision with the object may be avoided by maintaining braking power.

The reference time is a TTC value corresponding to a criterion for selecting one-sided braking or steering in operation of controlling heading of the vehicle 100 and may be determined by experimentation. The reference time may be prestored in the memory 440.

The processor 470 may receive information about air pressure of each tire included in the vehicle 100 from the TPMS 300 through the interface 430.

The processor 470 may provide a signal for one-sided braking to the brake apparatus 153a based on the tire pressure information.

The processor 470 may provide a signal for one-sided braking to the brake apparatus 153a based on an air pressure deviation of a plurality of tires.

When air pressure of a first tire provided to a first wheel is lower than air pressure of a second tire provided to a second wheel, the processor 470 may provide a signal for one-sided braking to the brake apparatus 153a such that braking power applied to the first wheel becomes less than braking power applied to the second wheel.

The first wheel and the second wheel may be provided to the same shaft. For example, the first wheel and the second wheel may be a front left wheel and a front right wheel, respectively. Alternatively, the first wheel and the second wheel may be a rear left wheel and a rear right wheel, respectively.

The first wheel and the second wheel may be provided different shafts. For example, the first wheel and the second wheel may be a front left wheel and a rear left wheel, respectively. Alternatively, the first wheel and the second wheel may be a front right wheel and a rear right wheel, respectively.

The first wheel and the second wheel may be located on a diagonal line. For example, the first wheel and the second wheel may be a front left wheel and a rear right wheel, respectively. Alternatively, the first wheel and the second wheel may be a front right wheel and a rear left wheel, respectively.

Grip between tires and the ground depends on tire pressure. When grip is changed, frictional force is changed and thus the braking distance may vary according to tire pressure even when the same braking power is applied to the vehicle. Accordingly, straightness of braking may be maintained by differentiating braking power of wheels having tires based on tire pressure.

The processor 470 may provide a signal for steering to the steering apparatus 152a based on tire pressure information. The processor 470 may perform steering control instead of one-sided braking control according to an air pressure deviation of the tires.

For example, when air pressure of the first tire provided to the first wheel is lower than air pressure of the second tire provided to the second wheel, the processor 470 may provide a signal for steering control to the steering apparatus 152a such that the vehicle is steered toward the second wheel from the center of the width of the vehicle.

The processor 470 may acquire information about a curve of the lane in which the vehicle travels. For example, the processor 470 may acquire information about presence or absence of a curve in front of the vehicle in the lane in which the vehicle travels and information about curvature of the curve.

The processor 470 may detect a curve from the image. The processor 470 may acquire information about curvature of the detected curve. For example, the processor 470 may acquire information about the curvature of the curve through road profiling. For example, the processor 470 may acquire information about the curvature of the curve through disparity calculation.

The processor 470 may acquire information about a curve from the display 141 or an additional navigation system through the interface 430. In this case, the processor 470 may further receive information about the curvature of the curve.

The processor 470 may receive information about a curve from an external device through the communication unit 410. Here, the external device may be a mobile terminal, an external server or other vehicles. In this case, the processor 470 may further include information about the curvature of the curve.

The processor 470 may provide a signal for steering to the steering apparatus 152a through the interface 430 based on the information about the curve. For example, the processor 470 may provide a signal for steering to the steering apparatus 152a through the interface 430 based on the information about the curvature of the curve.

The processor 470 may provide a signal for one-sided braking to the brake apparatus 153a through the interface 430 based on the information about the curve. For example, the processor 470 may provide a signal for one-sided braking to the brake apparatus 153a through the interface 430 based on the information about the curvature of the curve.

The processor 470 may provide a signal for steering to the steering apparatus 152a when the curvature of the curve exceeds a predetermined curvature. The processor 470 may provide a signal for one-sided braking to the brake apparatus 153a when the curvature of the curve exceeds the predetermined curvature. The processor 470 may provide the signal for steering and the signal for one-sided braking together.

When the vehicle 100 deviates from the lane while traveling around the curve, control of the vehicle 100 according to the curve and control of heading of the vehicle 100 need to be simultaneously performed.

If heading of the vehicle 100 deviates from the lane in a section having a high curvature, the vehicle 100 may not travel on the curve in a corrected heading state according to steering control only. In this case, the processor 470 provides the signal for steering and the signal for one-sided braking together such that the vehicle 100 may travel within the lane.

When the curvature of the curve is less than the reference curvature, the processor 470 may provide a signal for steering to the steering apparatus 152a.

When heading of the vehicle deviates from the lane in a section having a low curvature, the vehicle may travel around the curve in a corrected heading state according to steering control only.

The reference curvature is a criterion for selecting one-sided braking and steering or steering in operation of controlling heading of the vehicle 100 on a curve and may be determined by experimentation. The reference curvature may be prestored in the memory 440.

The processor 470 may generate a virtual centerline of the lane. The virtual centerline refers to a virtual centerline between the left line and the right line of the lane.

The processor 470 may provide a signal for steering to the steering apparatus 152a such that the center of the width of the vehicle is located on the virtual centerline. The processor 470 may provide a signal for one-sided braking to the brake apparatus 153a such that the center of the width of the vehicle is located on the virtual centerline.

In this manner, the width of the vehicle is controlled to be located on the virtual centerline to prevent the vehicle from escaping from the lane.

When a driver intervention event is sensed, the processor 470 may stop provision of the signal for steering to the steering apparatus 152a. When a driver intervention event is sensed, the processor 470 may stop provision of the signal for one-sided braking to the brake apparatus 153a.

A driver intervention event may be determined in various ways, for example by detecting that a user input has been received through the operation unit 121. For example, when acceleration input is received through an acceleration input unit, the processor 470 may determine the acceleration input as a driver intervention event. As another example, when steering input is received through a steering input unit, the processor 470 may determine the steering input as a driver intervention event.

FIG. 4B illustrates a configuration of the processor and signal processing of components of the processor according to implementation.

Referring to FIG. 4B, the processor 470 may include an image processor 471, a determination unit 474 and a signal supply unit 477.

The image processor 471 may receive an image from the vehicle camera 200.

The image processor 471 may process the received image using various methods.

The image processor 471 may detect a lane in which the vehicle travels based on the image.

The image processor 471 may acquire braking state information of the vehicle 100 based on the image. For example, the image processor 471 may acquire braking state information of the vehicle based on whether relative speed of the vehicle with respect to a fixed object decreases.

The image processor 471 may acquire position information of the vehicle 100 based on the image. Here, the position information of the vehicle 100 may correspond to a degree of swerving of the vehicle from the lane.

The image processor 471 may acquire speed information of the vehicle 100 based on the image. For example, the image processor 471 may acquire speed information of the vehicle 100 based on a distance between the vehicle and the fixed object with time.

The image processor 471 may calculate a distance between the vehicle and the object based on the image.

For example, the image processor 471 may calculate the distance between the vehicle and the object based on an object size change with time in the image. The image processor 471 may calculate TTC based on the calculated distance.

For example, the image processor 471 may calculate the distance between the vehicle and the object based on the focal distance of the lens 211 and the distance between the lens 211 and the image sensor 214.

For example, the image processor 471 may calculate the distance to the object based on the position of the object located on the road surface in the image.

For example, the image processor 471 may detect the distance to the object according to disparity calculation in a stereo image.

The image processor 471 may detect a curve based on the received image. The image processor 471 may acquire information about the curvature of the detected curve.

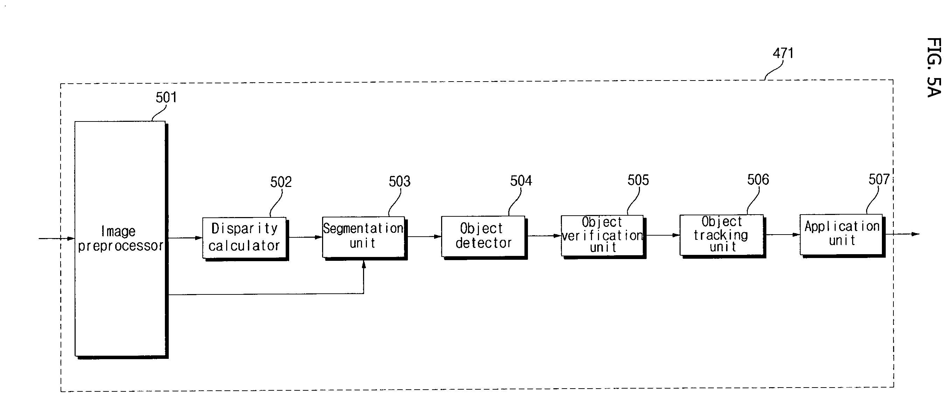

The image processor 471 will be described in more detail with reference to FIGS. 5A to 5F.

The determination unit 474 may perform determination based on information received from the image processor 471, information received through the interface 430, information received through the communication unit 410 or data received from the memory 440.

The determination unit 474 may receive braking state information of the vehicle 100 from the operation unit 121, the brake driver 153, the brake apparatus 153a or the controller 170 through the interface 430.

The determination unit 474 may receive position information of the vehicle from the sensing unit 125 through the interface 430.

The determination unit 474 may receive speed information of the vehicle 100 from the sensing unit 125 or the controller 170 through the interface 430.

The determination unit 474 may receive tire pressure information from the TPMS 300 through the interface 430.

The determination unit 474 may receive information about a curve from the display 141 or a navigation system through the interface 430.

The determination unit 474 may select steering control or one-sided braking control based on received information.

The determination unit 474 may select steering control or one-sided braking control based on heading of the vehicle and a degree of swerving of the vehicle from the lane in which the vehicle travels. The determination unit 474 may select one-sided braking control when the degree of swerving exceeds a reference value. The determination unit 474 may select steering control when the degree of swerving is less than the reference value.

The determination unit 474 may select steering control or one-sided braking control based on speed information. The determination unit 474 may select steering control when the speed of the vehicle 100 exceeds a reference speed. The determination unit 474 may select one-sided braking control when the speed of the vehicle 100 is lower than the reference speed.

The determination unit 474 may select steering control or one-sided braking control based on the distance between the vehicle and an object. The determination unit 474 may select one-sided braking control when the distance exceeds a reference distance. The determination unit 474 may select steering control when the distance is shorter than the reference distance.

The determination unit 474 may select steering control or one-sided braking control based on the distance between the vehicle and an object. The determination unit 474 may select one-sided braking control when the distance exceeds a reference distance. The determination unit 474 may select steering control when the distance is shorter than the reference distance.

The determination unit 474 may select steering control or one-sided braking control based on TTC with an object. The determination unit 474 may select one-sided braking control when the TTC with the object exceeds a reference time. The determination unit 474 may select steering control when the TTC with the object is shorter than the reference time.

The determination unit 474 may determine a degree of braking power applied to each tire based on air pressure information of each tire.

The determination unit 474 may select both steering control and one-sided braking control or only steering control based on information about a curve of the lane in which the vehicle travels. For example, the determination unit 474 may select both steering control and one-sided braking control when the curvature of the curve exceeds a reference curvature. The determination unit 474 may select steering control when the curvature of the curve is less than the reference curvature.

The signal supply unit 477 may provide a signal for steering to the steering apparatus 152a based on determination of the determination unit 474. The signal supply unit 477 may provide the signal for steering to the steering apparatus 152a via the steering driver 152.

The signal supply unit 477 may provide a signal for one-sided braking to the brake apparatus 153a based on determination of the determination unit 474. The signal supply unit 477 may provide the signal for one-sided braking to the brake apparatus 153a via the brake driver 153.

The signal supply unit 477 may provide a signal to the steering apparatus 152a or the brake apparatus 153a through the interface 430.

The communication unit 410 may exchange data with other devices located inside or outside the vehicle 100 in a wireless manner. Here, other devices may include a mobile terminal, a server and other vehicles.

For example, the communication unit 410 may wirelessly exchange data with a mobile terminal of the vehicle driver. Wireless communication schemes may include Bluetooth, Wi-Fi Direct, Wi-Fi, APiX, NFC, etc.

For example, the communication unit 410 may receive weather information, traffic information of a road, for example, TPEG (Transport Protocol Experts Group) information, from a mobile terminal or a server.

When a user enters the vehicle, the mobile terminal of the user and the driver assistance apparatus 400 may be paired automatically or according to execution of an application by the user.

The communication unit 410 may receive traffic light change information from an external server. Here, the external server may be a server located in a traffic control center.

The input unit 420 may receive user input. The input unit 420 may include a mechanical input unit, a touch type input unit, an audio input unit or a wireless input unit.

The mechanical input unit may include a button, a lever, a jog wheel, a switch or the like.

The touch type input unit may include at least one touch sensor. The touch type input unit may be configured as a touchscreen.

The audio input unit may include a microphone for converting user voice into an electrical signal.

The wireless input unit may receive radio user input applied using a key from the outside of the vehicle 100.

The input unit 420 may receive user input for opening or closing a door of the vehicle 100.

The output unit 450 may output data or information processed by the processor 470 under the control of the processor 470.

The output unit 450 may include a display unit 451 and an audio output unit 452.

The display unit 451 may display information processed by the processor 470. The display unit 451 may display images related to operation of the driver assistance apparatus 400. To display such images, the display unit 451 may include a cluster provided to the front of the inside of the vehicle or a head up display (HUD). When the display unit 451 is an HUD, the display unit 451 may include a projection module for projecting an image on the front windshield 10 or a combiner.

The audio output unit 452 may output sound based on an audio signal processed by the processor 470. To this end, the audio output unit 452 may include at least one speaker.

The power supply unit 490 may provide power that is used for operation of each component under the control of the processor 470. The power supply unit 490 may be provided with power from a battery included in the vehicle.

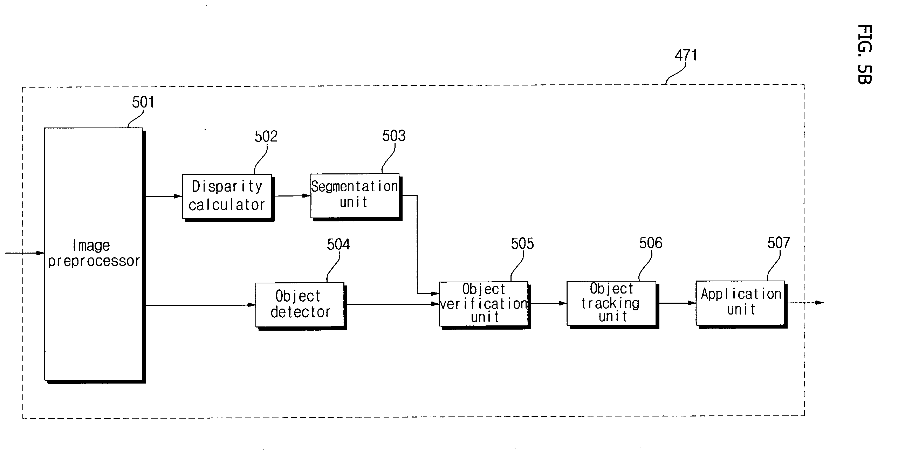

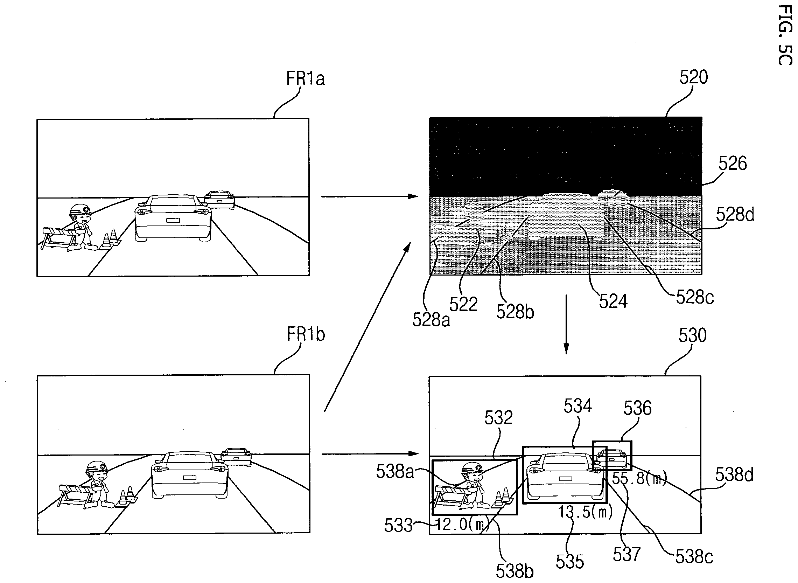

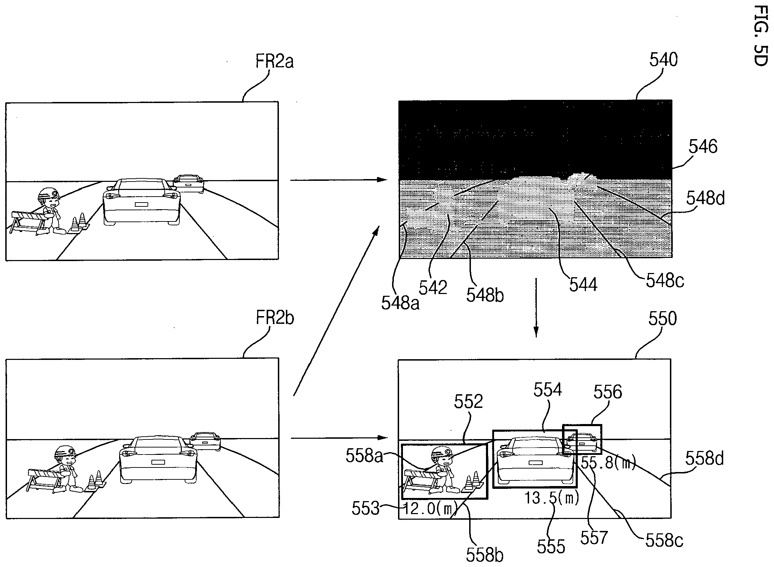

FIGS. 5A and 5B are block diagrams of the image processor shown in FIG. 4B and FIGS. 5C and 5D are views for explaining operations of the processor shown in FIG. 5B.

Referring to FIG. 5A, the image processor 471 may include an image preprocessor 501, a disparity calculator 502, an object detector 504, an object tracking unit 506, and an application unit 507.

The image preprocessor 501 may receive an image from the camera 200 and preprocess the image.

Specifically, the image preprocessor 501 may perform noise reduction, rectification, calibration, color enhancement, color space conversion (CSC), interpolation, camera gain control and the like on an image. Accordingly, a clearer image than stereo images photographed by the camera 200 may be acquired.

The disparity calculator 502 may receive the image processed by the image preprocessor 501, perform stereo matching on the received image and acquire a disparity map according to stereo matching. That is, the disparity calculator 502 may acquire disparity information about stereo images of the front view of the vehicle.

Here, stereo matching may be performed per pixel of the stereo images or on a block-by-block basis. The disparity map refers to a map that represents binocular parallax information of stereo images, that is, left and right images, as numerical values.

A segmentation unit 503 may perform segmentation and clustering on at least one image based on the disparity information from the disparity calculator 502.

Specifically, the segmentation unit 503 may separate a background and a foreground from at least one of the stereo images based on the disparity information.

For example, the segmentation unit 503 may calculate a region corresponding to disparity information less than a predetermined value in the disparity map as a background and remove the corresponding region. Accordingly, a foreground may be relatively separated.

Alternatively, the segmentation unit 503 may calculate a region corresponding to disparity information that exceeds the predetermined value in the disparity map as a foreground and extract the corresponding region, thereby separating the foreground.

When the foreground and the background are separated based on the disparity information extracted based on the stereo images, a signal processing speed may be increased and the quantity of processed signals may be reduced during object detection.

The object detector 504 may detect an object based on image segments from the segmentation unit 503.

That is, the object detector 504 may detect an object from at least one image based on the disparity information.

Specifically, the object detector 504 may detect an object from at least one image. For example, the object detector 504 may detect an object from a foreground separated according to image segmentation.

An object verification unit 505 may classify and verify the detected object.

To this end, the object verification unit 505 may use an identification method using a neural network, a support vector machine (SVM) method, an identification method according to AdaBoost using Haar-like characteristics, histograms of oriented gradients (HOG) or the like.

The object verification unit 505 may verify the detected object by comparing the detected object with objects stored in the memory 440.

For example, the object verification unit 505 may verify vehicles, lanes, road surfaces, road signs, danger zones, tunnels and the like, located around the corresponding vehicle.

The object-tracking unit 506 may track the verified object. For example, the object-tracking unit 506 may verify an object included in sequentially acquired stereo images, calculate motion or a motion vector of the verified object and track movement of the object based on the calculated motion or motion vector. Accordingly, the object-tracking unit 506 may track vehicles, lanes, road surfaces, road signs, danger zones, tunnels and like around the corresponding vehicle.

The application unit 507 may calculate a degree of car accident risk of the vehicle 100 based on various objects around the vehicle, for example, other vehicles, lanes, road surfaces, road signs and the like. In addition, the application unit 507 may calculate possibility of rear-end collision, slip of the vehicle and the like.

Furthermore, the application unit 507 may output messages for informing the user of the calculated hazard, rear-end collision possibility or vehicle slip as vehicle driving assistance information based on the calculated hazard, rear-end collision possibility or vehicle slip. In addition, the application unit 507 may generate a control signal for position control or driving control of the vehicle 100 as vehicle control information.

The image preprocessor 501, the disparity calculator 502, the segmentation unit 503, the object detector 504, the object verification unit 505, the object tracking unit 506 and the application unit 507 may be internal components of the image processor 471 in the processor 470.

According to one implementation, the processor 470 may include part of the image preprocessor 501, the disparity calculator 502, the segmentation unit 503, the object detector 504, the object verification unit 505, the object tracking unit 506 and the application unit 507. When the camera 200 is configured as a mono camera or an around view camera, the disparity calculator 502 may be excluded. Furthermore, the segmentation unit 503 may be excluded according to implementation.

FIG. 5B is a block diagram of the processor.

As shown, the image processor 471 of FIG. 5B has the same internal component units as the image processor 471 of FIG. 5A but differs from the image processor 471 of FIG. 5A with respect to signal processing order. Only such difference is described in the following.

The object detector 504 receives stereo images and detects an object from at least one stereo image. Distinguished from the image processor shown in FIG. 5A, the object detector 504 may directly detect an object from a stereo image instead of detecting the object from segmented images based on disparity information.

The object verification unit 505 classifies and verifies detected and separated objects based on image segments from the segmentation unit 503 and objects detected by the object detector 504.

To this end, the object verification unit 505 may use an identification method using a neural network, a support vector machine (SVM) method, or an identification method according to AdaBoost using Haar-like characteristics or histograms of oriented gradients (HOG).

FIGS. 5C and 5D are views for explaining operation of the processor 470 shown in FIGS. 4A to 4C based on stereo images respectively acquired in first and second frame intervals.

Referring to FIG. 5C, the stereo camera 200 acquires stereo images in the first frame interval.

The disparity calculator 502 included in the processor 470 receives stereo images FR1a and FR1b, which are processed into signals by the image preprocessor 501, and performs stereo matching on the received stereo images FR1a and FR1b so as to acquire a disparity map 520.

The disparity map 520 represents levels of disparity between the stereo images FR1a and FR1b. A distance to the vehicle is recognized to be shorter as the disparity level increases and is recognized to be longer as the disparity level decreases.

When the disparity map is displayed, a higher disparity level may be represented as higher brightness and a lower disparity level may be represented as lower brightness.

In FIG. 5C, first to fourth lanes 528a, 528b, 528c and 528d respectively have disparity levels corresponding thereto and a construction zone 522, a first preceding vehicle 524 and a second preceding vehicle 526 respectively have disparity levels corresponding thereto in the disparity map 520.

The segmentation unit 503, the object detector 504 and the object verification unit 505 respectively perform segmentation, object detection and object verification on at least one of the stereo images FR1a and FR1b based on the disparity map 520.

FIG. 5C illustrates that object detection and verification are performed on the second stereo image FR1b using the disparity map 520.

That is, the first to fourth lanes 538a, 538b, 538c and 538d, the construction zone 532, the first preceding vehicle 534 and the second preceding vehicle 536 in an image 530 may be detected and verified.

Referring to FIG. 5D, the stereo camera 200 acquires stereo images in the second frame interval.

The disparity calculator 502 included in the processor 470 receives stereo images FR2a and FR2b, which are processed into signals by the image preprocessor 501, and performs stereo matching on the received stereo images FR2a and FR2b so as to acquire a disparity map 540.

In FIG. 5D, first to fourth lanes 548a, 548b, 548c and 548d respectively have disparity levels corresponding thereto and a construction zone 542, a first preceding vehicle 544 and a second preceding vehicle 546 respectively have disparity levels corresponding thereto in the disparity map 540.

The segmentation unit 503, the object detector 504 and the object verification unit 505 respectively perform segmentation, object detection and object verification on at least one of the stereo images FR2a and FR2b based on the disparity map 540.

FIG. 5D illustrates that object detection and verification are performed on the second stereo image FR2b using the disparity map 540.

That is, the first to fourth lanes 548a, 548b, 548c and 548d, the construction zone 542, the first preceding vehicle 544 and the second preceding vehicle 546 in an image 550 may be detected and verified.

The object tracking unit 506 tracks the verified objects by comparing FIG. 5A and FIG. 5B.

Specifically, the object-tracking unit 506 may track movement of the objects verified in FIGS. 5A and 5B based on motions or motion vectors of the objects. Accordingly, the object-tracking unit 504 may track the lanes, the construction zone, the first preceding vehicle and the second preceding vehicle, which are located around the corresponding vehicle.

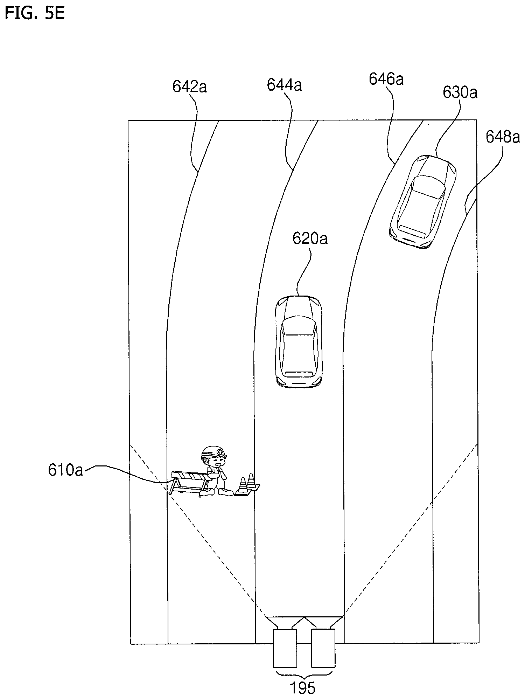

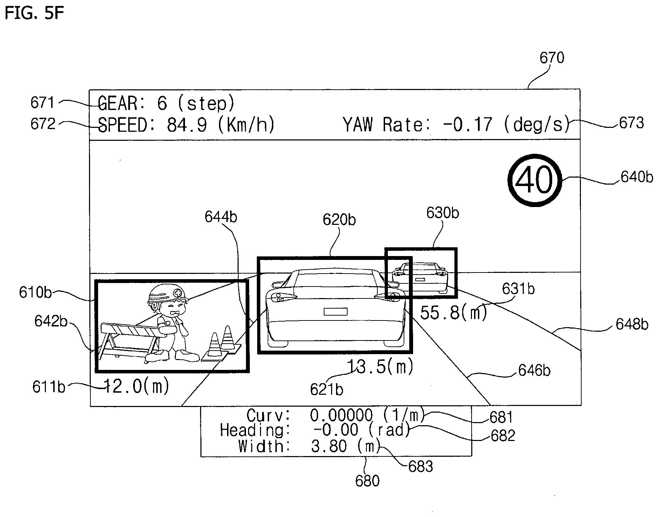

FIGS. 5E and 5F are views for explaining operation of the driver assistance apparatus shown in FIGS. 5A to 5C.

FIG. 5E illustrates a front view image of the vehicle, photographed by the stereo camera 200 included in the vehicle. Particularly, the front view image is displayed as a bird's eye view image.

Referring to FIG. 5E, first, second, third and fourth lanes 642a, 644a, 646a and 648a are present from left to right, a construction zone 610a is located between the first lane 642a and the second lane 644a, a first preceding vehicle 620a is positioned between the second lane 644a and the third lane 646a, and a second preceding vehicle 630a is positioned between the third lane 646a and the fourth lane 648a.

FIG. 5F illustrates display of situations in front of the vehicle, recognized by the driver assistance apparatus, along with various types of information. Particularly, the image shown in FIG. 5F may be displayed on the display unit 451 of the driver assistance apparatus and the display 141 for the vehicle.

FIG. 5F illustrates display of information based on an image captured by the stereo camera 200, distinguished from FIG. 5E.

Referring to FIG. 5F, first, second, third and fourth lanes 642b, 644b, 646b and 648b are present from left to right, a construction zone 610b is located between the first lane 642b and the second lane 644b, a first preceding vehicle 620b is positioned between the second lane 644b and the third lane 646b, and a second preceding vehicle 630b is positioned between the third lane 646b and the fourth lane 648b.

The driver assistance apparatus 400 may verify objects with respect to the construction zone 610b, the first preceding vehicle 620b and the second preceding vehicle 630b by processing stereo images acquired by the stereo cameras 200a and 200b into signals.

FIG. 5F shows that the borders of the construction zone 610b, the first preceding vehicle 620b and the second preceding vehicle 630b are highlighted in order to indicate object verification with respect to the construction zone 610b, the first preceding vehicle 620b and the second preceding vehicle 630b.

The driver assistance apparatus 400 may calculate distances between the corresponding vehicle and the construction zone 610b, the first preceding vehicle 620b and the second preceding vehicle 630b based on the stereo images acquired by the stereo camera 200.

FIG. 5F illustrates display of first distance information 611b, second distance information 621b and third distance information 631b respectively corresponding to the construction zone 610b, the first preceding vehicle 620b and the second preceding vehicle 630b.

The driver assistance apparatus 400 may receive sensor information about the vehicle from the controller 170 or the sensing unit 125. Particularly, the driver assistance apparatus 400 may receive a vehicle speed, gear information, a yaw rate that indicates a rotation angle (yaw angle) of the vehicle, and vehicle heading information and display the received information.

Referring to FIG. 5F, while a vehicle speed 672, gear information 671 and a yaw rate 673 are displayed on the upper part 670 of the front view image of the vehicle, and heading information 682 is displayed on the lower part 680 of the front view image of the vehicle, various other examples are possible. In addition, the width 683 of the vehicle and road curvature information 681 may be displayed along with the heading information 682.

The driver assistance apparatus 400 may receive information on a speed limit with respect to the road on which the vehicle is being driven through the communication unit 410 or the interface 430.

While the driver assistance apparatus 400 may display the information shown in FIG. 5F through the display, the driver assistance apparatus 400 may store the information without displaying the same. In addition, the driver assistance apparatus 400 may use the information for various applications.

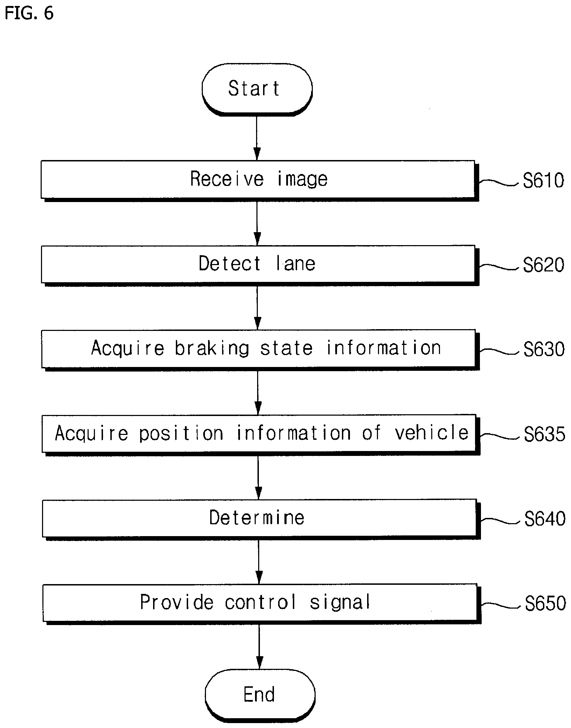

FIG. 6 is a flowchart illustrating operation of the driver assistance apparatus according to an implementation.

Referring to FIG. 6, the processor 470 may receive an image of surroundings of the vehicle 100 from the vehicle camera 200 (S610). Here, the image of the surroundings of the vehicle may include a front view image, a rear view image, a side view image and an around view image of the vehicle.

The processor 470 may detect a lane from the image (S620). The lane refers to a lane in which the vehicle travels.

The processor 470 may acquire braking state information of the vehicle 100 (S630).

The processor 470 may acquire the braking state information of the vehicle 100 based on the received image.

The processor 470 may receive the braking state information of the vehicle 100 from the operation unit 121, the brake driver 153, the brake apparatus 153a or the controller 170 through the interface 430.

While FIG. 6 shows that the braking state information is acquired (S630) after detection of the lane (S620), lane detection (S620) may be performed after braking state information acquisition (S630).

The processor 470 may acquire position information of the vehicle (S635). Here, the position information may correspond to a degree of deviation of heading of the vehicle from the lane.

Upon detection of the lane and acquisition of the braking state information, the processor 470 may select steering control or one-sided braking control (S640).

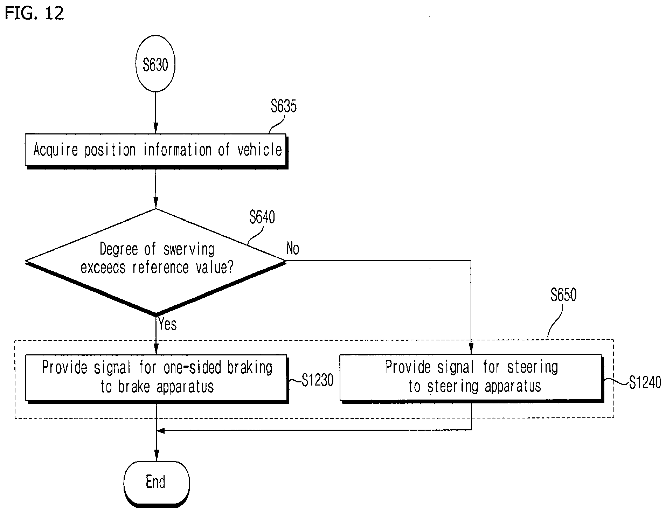

Step S640 will be described in detail with reference to FIG. 12.

Upon selection of steering control or one-sided braking control, the processor 470 may provide a control signal corresponding to the selection result to the steering apparatus 152a or the brake apparatus 153a (S650).

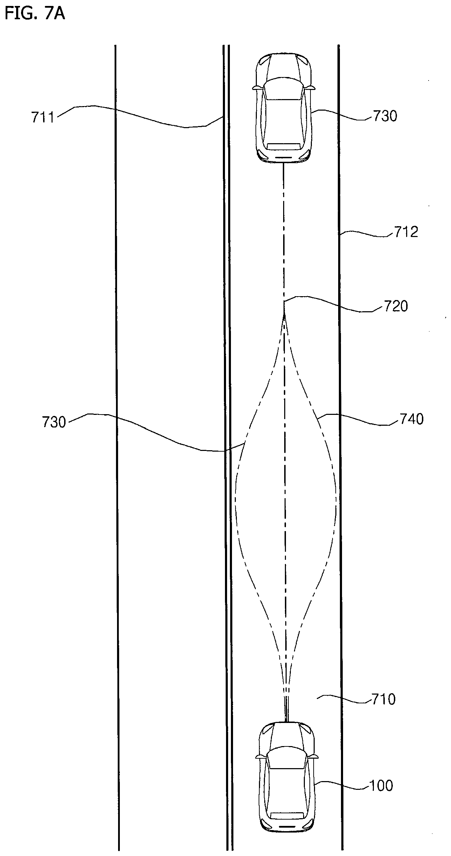

FIG. 7A is a bird's eye view of the vehicle according to an implementation.

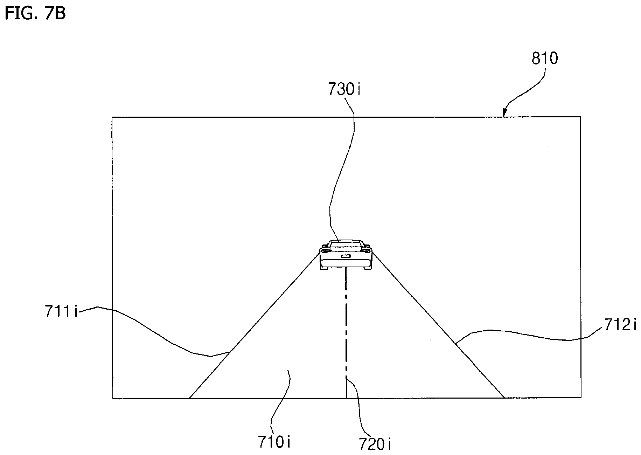

FIG. 7B is a front view image of the vehicle, photographed through the vehicle camera, in the situation of FIG. 7A according to an implementation.

Referring to FIGS. 7A and 7B, the vehicle 100 travels in a lane 710. The lane 710 refers to a road section between a left line 711 and a right line 712 based on the forward direction.

The processor 470 may detect a lane 710i from an image 810. The processor 470 may detect a left line 711i and a right line 712i forming the lane 710i from the image 810.

The processor may generate a virtual centerline 720i. The virtual centerline 720i refers to the centerline between the left line 711i and the right line 712i.

The processor 470 may detect an object 730i from the image 810.

The processor 470 may acquire position information of the vehicle 100. The processor 470 may detect whether heading of the vehicle 100 deviates from the lane 710 (730 and 740).

The processor may control the vehicle 100 to stop within the lane 710 during braking of the vehicle 100. Specifically, the processor 470 may provide a signal for steering to the steering apparatus 152a or provide a signal for one-sided braking to the brake apparatus 153a such that the vehicle 100 stops within the lane 710 during braking of the vehicle 100.

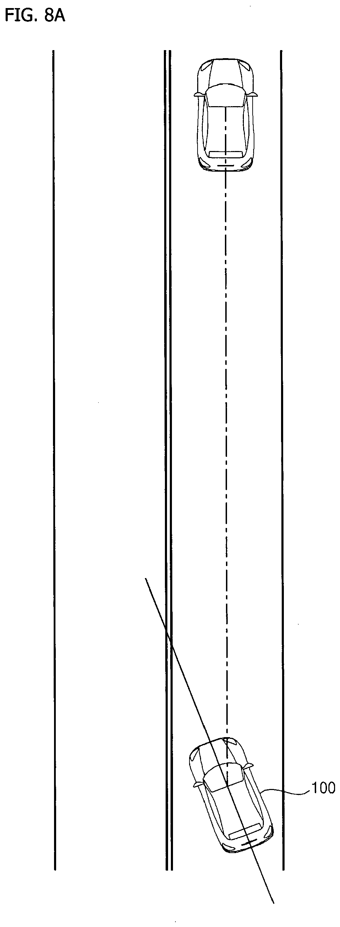

FIG. 8A illustrates a situation in which the vehicle swerves to the left during braking according to an implementation.

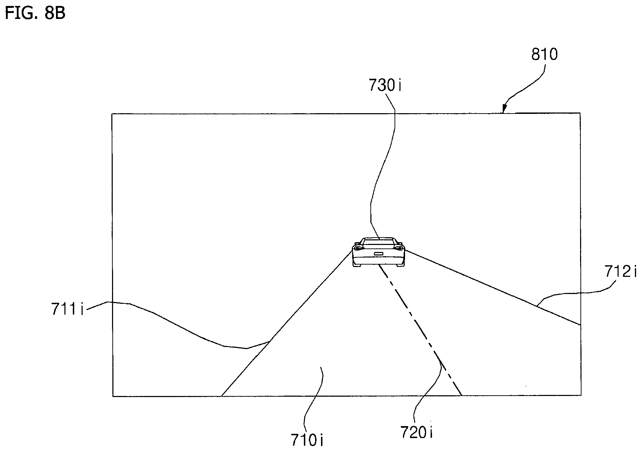

FIG. 8B is a front view image of the vehicle, photographed through the vehicle camera, in the situation of FIG. 8A according to an implementation.

The processor 470 may detect position information of the vehicle 100 based on the image 810.

The processor 470 may detect the position information of the vehicle 100 based on the position of the lane 710i, which is detected from the image 810, in the image 810.

For example, when the detected lane 710i is located to the right in the image 810, the processor 470 may recognize that the vehicle 100 swerves to the left.

The processor 470 may detect the position information of the vehicle 100 based on the position of the left line 711i or the right line 712i detected from the image 810.

For example, when the detected left line 711i or the right line 712i is located to the right compared to normal driving, the processor 470 may recognize that the vehicle 100 swerves to the left.

The processor 470 may detect the position information of the vehicle 100 based on the virtual centerline 720i.

For example, when the virtual centerline 720i is located to the right in the image 810, the processor 470 may recognize that the vehicle 100 swerves to the left.

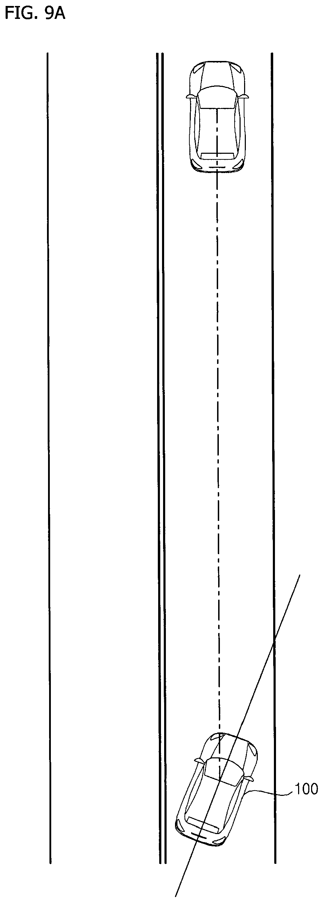

FIG. 9A illustrates a situation in which the vehicle swerves to the right during braking according to an implementation.

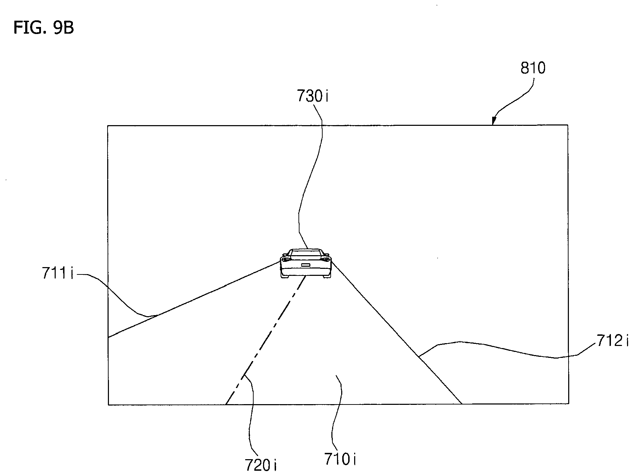

FIG. 9B is a front view image of the vehicle, photographed through the vehicle camera, in the situation of FIG. 9A according to an implementation.

The processor 470 may detect position information of the vehicle 100 based on the image 810.

The processor 470 may detect the position information of the vehicle 100 based on the position of the lane 710i, which is detected from the image 810, in the image 810.

For example, when the detected lane 710i is located to the left in the image 810, the processor 470 may recognize that the vehicle 100 swerves to the right.

The processor 470 may detect the position information of the vehicle 100 based on the position of the left line 711i or the right line 712i detected from the image 810.

For example, when the detected left line 711i or the right line 712i is located to the left compared to normal driving, the processor 470 may recognize that the vehicle 100 swerves to the right.

The processor 470 may detect the position information of the vehicle 100 based on the virtual centerline 720i.

For example, when the virtual centerline 720i is located to the left in the image 810, the processor 470 may recognize that the vehicle 100 swerve to the right.

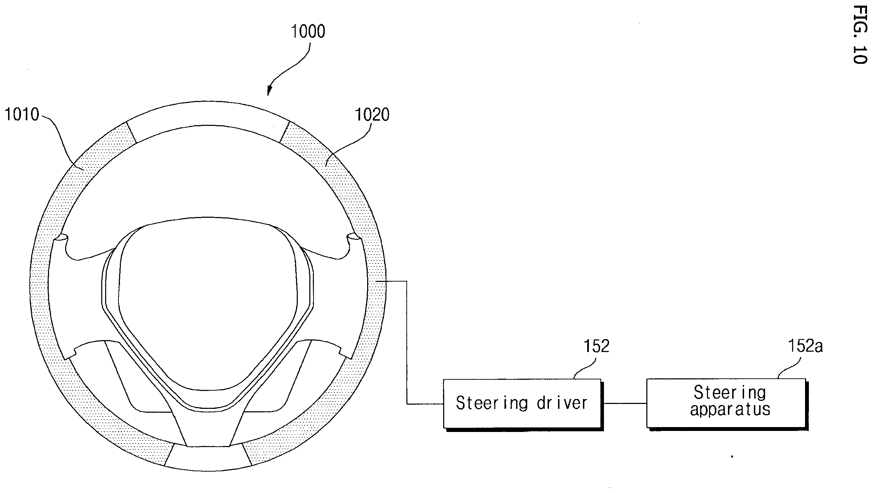

FIG. 10 illustrates a steering system of the vehicle according to an implementation.

Referring to FIG. 10, the steering system may include a steering input apparatus 1000, the steering driver 152 and the steering apparatus 152a.

The steering input apparatus 1000 may be a steering wheel. The steering input apparatus 1000 may include a first indicator 1010 and a second indicator 1020.

The first indicator 1010 may include at least one light emitting element and the second indicator 1020 may include at least one light emitting element.

The steering driver 152 may control the steering apparatus 152a. The steering apparatus 152a may rotate steering wheels (e.g. front wheels) around the shaft formed in the overall length direction under the control of the steering driver 152.

The processor 470 of the driver assistance apparatus 400 may provide a signal for steering to the steering apparatus 152a.

According to one implementation, the processor 470 may provide a signal for steering to the steering apparatus 152a via the steering driver 152.

According to one implementation, the processor 470 may provide a steering indication signal to the steering input apparatus 1000. For example, the processor 470 may provide a signal to the steering input apparatus 1000 such that the light emitting element of the first indicator 1010 emits light when the vehicle needs to be steered to the left and provide a signal to the steering input apparatus 1000 such that the light emitting element of the second indicator 1010 emits light when the vehicle needs to be steered to the right.

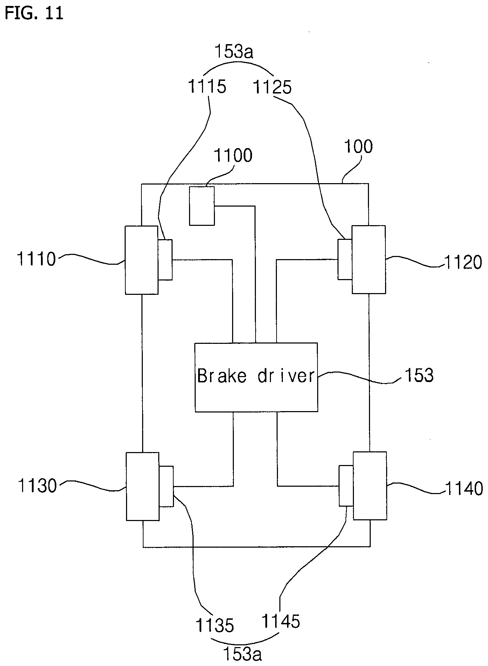

FIG. 11 illustrates a brake system of the vehicle according to an implementation.

Referring to FIG. 11, the brake system may include a brake input apparatus 1100, the brake driver 153 and the brake apparatus 153a.

The brake input apparatus 1100 receives user input for speed reduction of the vehicle 100. The brake input apparatus 1100 may be configured in the form of a pedal.

The brake driver 153 may control the brake apparatus 153a. The brake apparatus 153a may be driven under the control of the brake driver 153.

The brake apparatus 153a may include a first wheel brake 1115 for braking a first wheel 1110, a second wheel brake 1125 for braking a second wheel 1120, a third wheel brake 1135 for braking a third wheel 1130 and a fourth wheel brake 1145 for braking a fourth wheel 1140.

The brake driver 153 may independently control the first to fourth wheel brakes 1115, 1125, 1135 and 1145. The brake driver 153 may control different braking powers to be respectively applied to the first to fourth wheel brakes 1115, 1125, 1135 and 1145.

FIG. 12 is a flowchart illustrating operation of the driver assistance apparatus according to an implementation.

The operation of the driver assistance apparatus shown in FIG. 12 may be an exemplary operation of the driver assistance apparatus shown in FIG. 6.

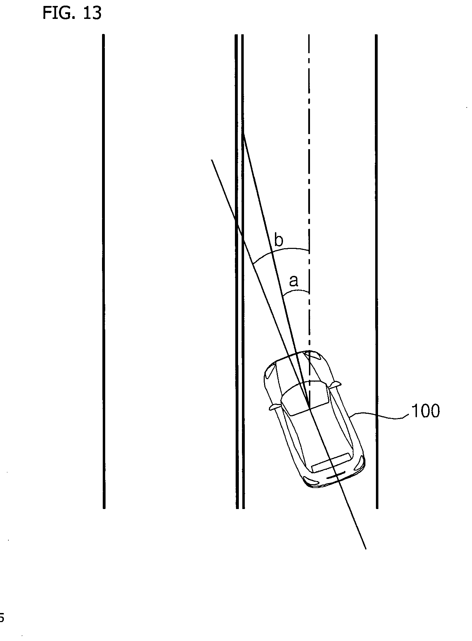

FIG. 13 is a view for explaining the operation of the driver assistance apparatus shown in FIG. 12 according to an implementation.

Referring to FIGS. 12 and 13, the processor 470 may acquire position information of the vehicle (S635). The position information may refer to a degree of swerving of the vehicle from the lane in which the vehicle travels.

The processor 470 may determine whether the degree of swerving exceeds a reference value (S640). The processor 470 may determine whether an angle b of swerving of the vehicle from the lane exceeds a reference angle a prestored in the memory 440.

The processor 470 may provide a signal for one-sided braking to the brake apparatus 153a when the degree of swerving exceeds the reference value (S1230).

For example, the processor 470 may provide a signal for one-sided braking to the brake apparatus 153a such that higher braking power is applied to the right wheels than the left wheels when the vehicle 100 swerves to the left based on the forward direction.

For example, the processor 470 may provide a signal for one-sided braking to the brake apparatus 153a such that higher braking power is applied to the left wheels than the right wheels when the vehicle 100 swerves to the right on the basis of the forward direction.

The processor 470 may provide a signal for steering to the steering apparatus 152a when the degree of swerving is less than the reference value (S12240).

For example, the processor 470 may provide a signal for steering to the steering apparatus 152a such that the vehicle is steered to the right when the vehicle 100 swerves to the left based on the forward direction.

For example, the processor 470 may provide a signal for steering to the steering apparatus 152a such that the vehicle is steered to the left when the vehicle 100 swerves to the right based on the forward direction.

Steps S1230 and S1240 may be included in step S650 of FIG. 6.

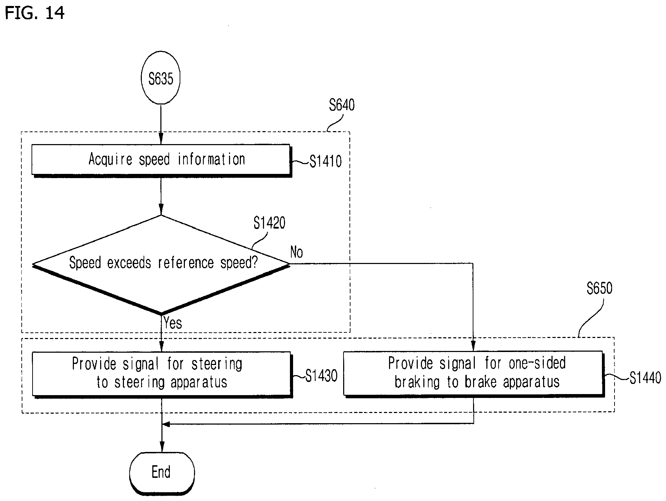

FIG. 14 is a flowchart illustrating operation of the driver assistance apparatus according to an implementation.

The operation of the driver assistance apparatus shown in FIG. 14 may be an exemplary operation of the driver assistance apparatus shown in FIG. 6.

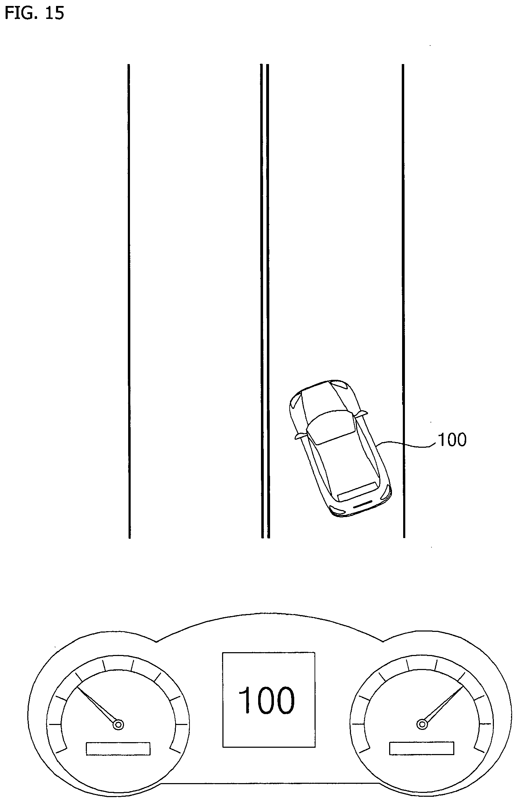

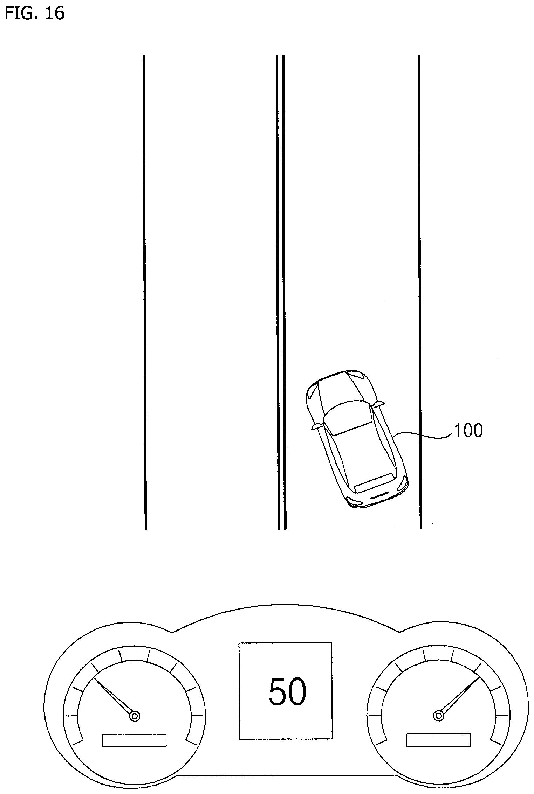

FIGS. 15 and 16 are views for explaining the operation of the driver assistance apparatus shown in FIG. 14 according to an implementation.

Referring to FIGS. 14, 15 and 16, the processor 470 may acquire speed information of the vehicle 100 (S1410).

The processor 470 may determine whether the speed of the vehicle 100 exceeds a reference speed (S1420).

The processor 470 may provide a signal for steering to the steering apparatus 152a when the speed of the vehicle 100 exceeds the reference speed (S1430).

As shown in FIG. 15, when the reference speed is stored in the memory 440 as 80 km per hour and the vehicle 100 swerves from the lane while traveling at 100 km per hour, the processor 470 may provide a signal for steering to the steering apparatus 152a.

For example, the processor 470 may provide a signal for steering to the steering apparatus 152a such that the vehicle 100 is steered to the right based on the forward direction when the vehicle 100 swerves to the left.

For example, the processor 470 may provide a signal for steering to the steering apparatus 152a such that the vehicle 100 is steered to the left based on the forward direction when the vehicle 100 swerves to the right.

The processor 470 may provide a signal for one-sided braking to the brake apparatus 153a when the speed of the vehicle 100 is lower than the reference speed (S1440).

As shown in FIG. 16, when the reference speed is stored in the memory 440 as 80 km per hour and the vehicle 100 swerves from the lane while traveling at 50 km per hour, the processor 470 may provide a signal for one-sided braking to the brake apparatus 153a.

For example, the processor 470 may provide a signal for one-sided braking to the brake apparatus 153a such that higher braking power is applied to the right wheels than the left wheels when the vehicle 100 swerves to the left.

For example, the processor 470 may provide a signal for one-sided braking to the brake apparatus 153a such that higher braking power is applied to the left wheels than the right wheels when the vehicle 100 swerves to the right.

Steps S1410 and S1420 may be included in step S640 of FIG. 6 and steps S1430 and S1440 may be included in step S650 of FIG. 6.

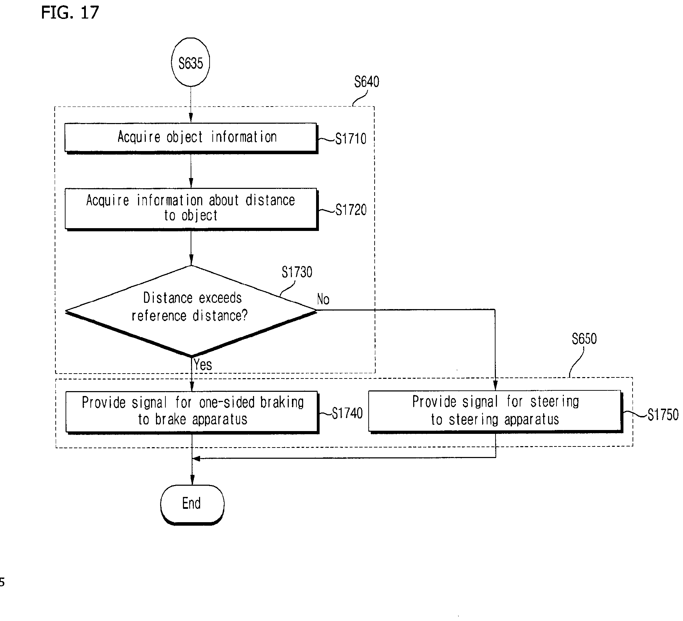

FIG. 17 is a flowchart illustrating operation of the driver assistance apparatus according to an implementation.

The operation of the driver assistance apparatus shown in FIG. 17 may be an exemplary operation of the driver assistance apparatus shown in FIG. 6.

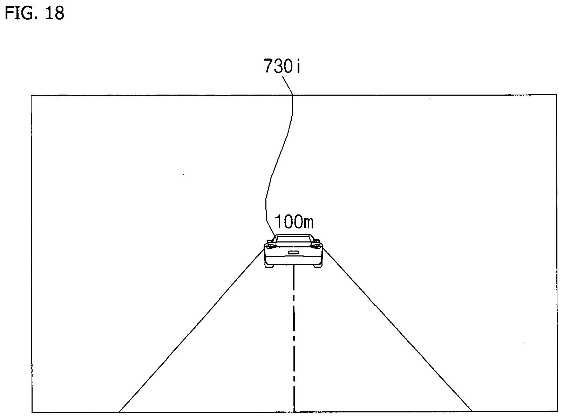

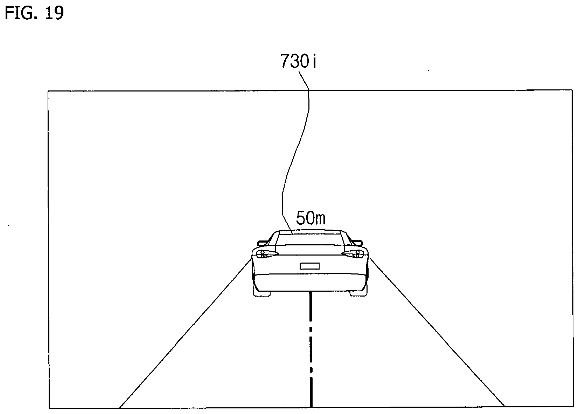

FIGS. 18 and 19 are views for explaining the operation of the driver assistance apparatus shown in FIG. 17 according to an implementation.

Referring to FIGS. 17, 18 and 19, the processor 470 may acquire information about an object (S1710). Here, the object may be a preceding vehicle traveling in the lane in which the vehicle 100 travels.

The processor 470 may acquire information about a distance between the vehicle 100 and the object (S1720).

The processor 470 may determine whether the distance exceeds a reference distance (S1730).

The processor 470 may provide a signal for one-sided braking to the brake apparatus 153a when the distance exceeds the reference distance (S1740).

As shown in FIG. 18, when the reference distance is stored in the memory 4340 as 80m and the vehicle 100 swerves from the lane with a distance of 100m from the object, the processor 470 may provide a signal for one-sided braking to the brake apparatus 153a.

For example, the processor 470 may provide a signal for one-sided braking to the brake apparatus 153a such that higher braking power is applied to the right wheels than the left wheels when the vehicle 100 swerves to the left.

For example, the processor 470 may provide a signal for one-sided braking to the brake apparatus 153a such that higher braking power is applied to the left wheels than the right wheels when the vehicle 100 swerves to the right.

The processor 470 may provide a signal for steering to the steering apparatus 152a when the distance between the vehicle and the object is shorter than the reference distance (S1750).

As shown in FIG. 19, when the reference distance is stored in the memory 4340 as 80m and the vehicle 100 swerves from the lane with a distance of 50m from the object, the processor 470 may provide a signal for steering to the steering apparatus 152a.

For example, the processor 470 may provide a signal for steering to the steering apparatus 152a such that the vehicle is steered to the right when the vehicle 100 swerves to the left.

For example, the processor 470 may provide a signal for steering to the steering apparatus 152a such that the vehicle is steered to the left when the vehicle 100 swerves to the right.

Steps S1710, S1720 and S1730 may be included in step S640 of FIG. 6 and steps S1740 and S1750 may be included in step S650 of FIG. 6.

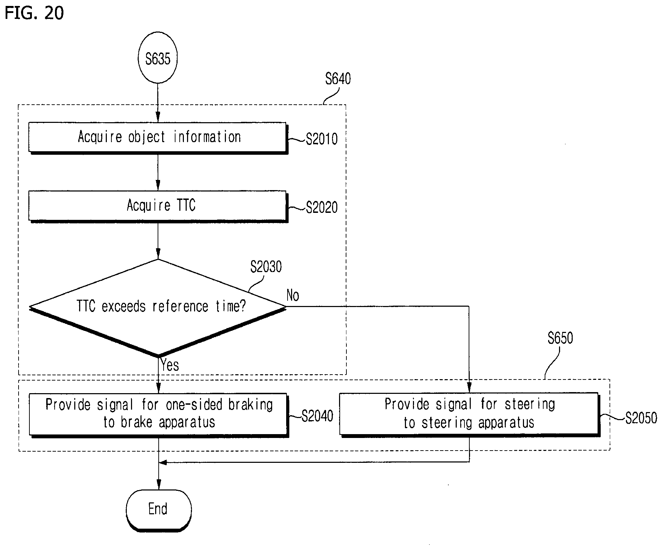

FIG. 20 is a flowchart illustrating operation of the driver assistance apparatus according to an implementation.

The operation of the driver assistance apparatus shown in FIG. 20 may be an exemplary operation of the driver assistance apparatus shown in FIG. 6.

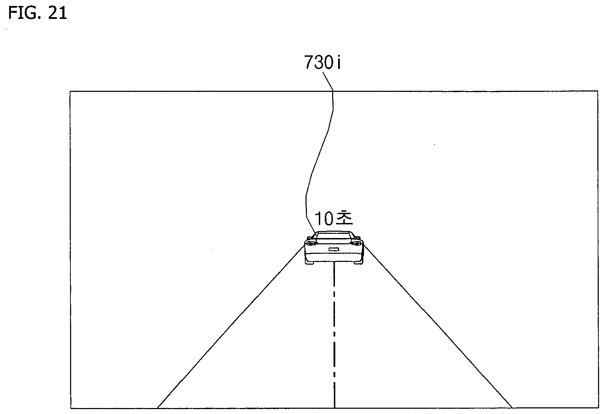

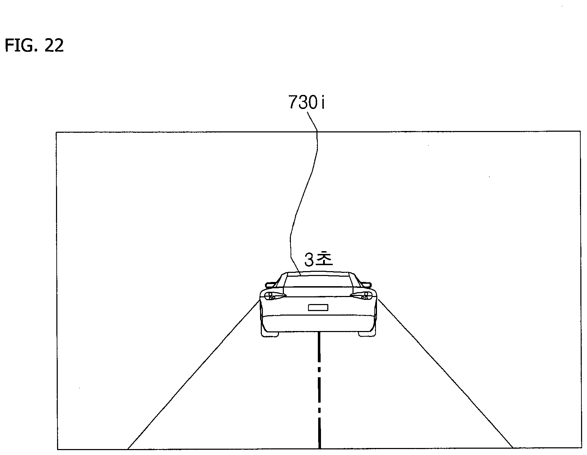

FIGS. 21 and 22 are views for explaining the operation of the driver assistance apparatus shown in FIG. 20 according to an implementation.

Referring to FIGS. 20, 21 and 22, the processor 470 may acquire information about an object (S2010). Here, the object may be a preceding vehicle traveling in the lane in which the vehicle 100 travels.

The processor 470 may acquire information about TTC with the object (S2020).

The processor 470 may determine whether the TTC with the object exceeds a reference TTC (S2030).

The processor 470 may provide a signal for one-sided braking to the brake apparatus 153a when the TTC with the object exceeds the reference TTC (S2040).

Referring to FIG. 21, when the reference TTC is stored in the memory 440 as 5 seconds and the vehicle swerves from the lane while traveling having TTC of 10 seconds with the object, the processor 470 may provide a signal for one-sided braking to the brake apparatus 153a.

For example, the processor 470 may provide a signal for one-sided braking to the brake apparatus 153a such that higher braking power is applied to the right wheels than the left wheels when the vehicle 100 swerves to the left.

For example, the processor 470 may provide a signal for one-sided braking to the brake apparatus 153a such that higher braking power is applied to the left wheels than the right wheels when the vehicle 100 swerves to the right.

The processor 470 may provide a signal for steering to the steering apparatus 152a when the TTC with the object is shorter than the reference TTC (S2050).

Referring to FIG. 22, when the reference TTC is stored in the memory 440 as 5 seconds and the vehicle swerves from the lane while traveling having TTC of 3 seconds with the object, the processor 470 may provide a signal for steering to the steering apparatus 152a.

For example, the processor 470 may provide a signal for steering to the steering apparatus 152a such that the vehicle is steered to the right when the vehicle 100 swerves to the left.

For example, the processor 470 may provide a signal for steering to the steering apparatus 152a such that the vehicle is steered to the left when the vehicle 100 swerves to the right.

Steps S2010, S2020 and S2030 may be included in step S640 of FIG. 6 and steps S2040 and S2050 may be included in step S650 of FIG. 6.

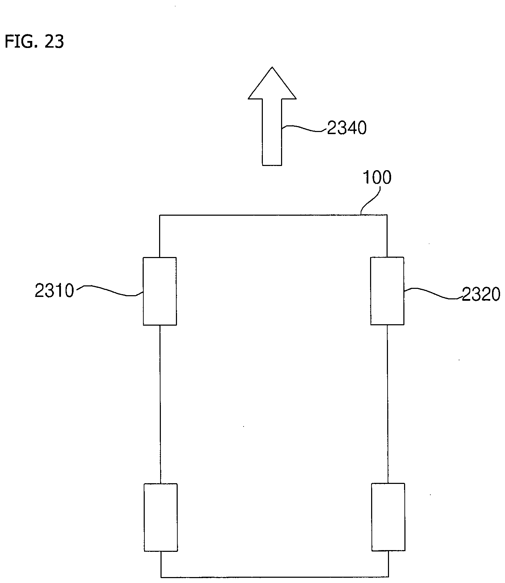

FIG. 23 is a view for explaining operation of the driver assistance apparatus based on tire pressure according to an implementation.

Referring to FIG. 23, the processor 470 may receive tire pressure information about a plurality of tires included in the vehicle 100 from the TPMS 300 through the interface 430.

The processor 470 may provide a signal for one-sided braking to the brake apparatus 153a based on the tire pressure information.

The processor 470 may provide the signal for one-sided braking to the brake apparatus 153a based on an air pressure deviation of the plurality of tires.

When the air pressure of a first tire 2310 of the first wheel is lower than that of a second tire 2320 of the second wheel, grip of the first tire 2310 is higher than grip of the second tire 2320. If the same braking power is applied to the first and second wheels, the vehicle 100 rotates toward the first wheel from the center of the overall length. Referring to FIG. 23, the vehicle 100 rotates to the left of the traveling direction 2340.

In this case, the processor 470 may provide a signal for one-sided braking to the brake apparatus 153a such that braking power applied to the first wheel is lower than braking power applied to the second wheel. Alternatively, the processor 470 may provide a signal for one-sided braking to the brake apparatus 153a such that braking power applied to the second wheel is higher than braking power applied to the first wheel.

The processor 470 may provide a signal for steering to the steering apparatus 152a such that the vehicle is steered toward the second wheel from the center of the overall length. Referring to FIG. 23, the processor 470 may provide a signal for steering to the steering apparatus 152a such that the vehicle 100 is steered to the right of the traveling direction.

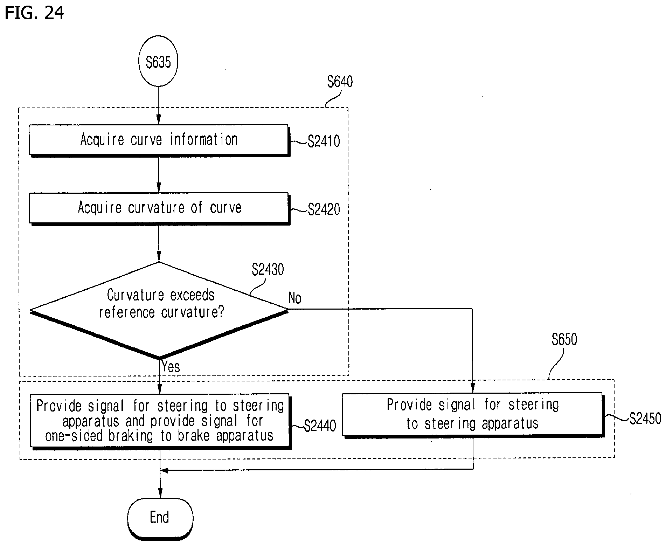

FIG. 24 is a flowchart illustrating operation of the driver assistance apparatus according to an implementation.

The operation of the driver assistance apparatus shown in FIG. 24 may be an exemplary operation of the driver assistance apparatus shown in FIG. 6.

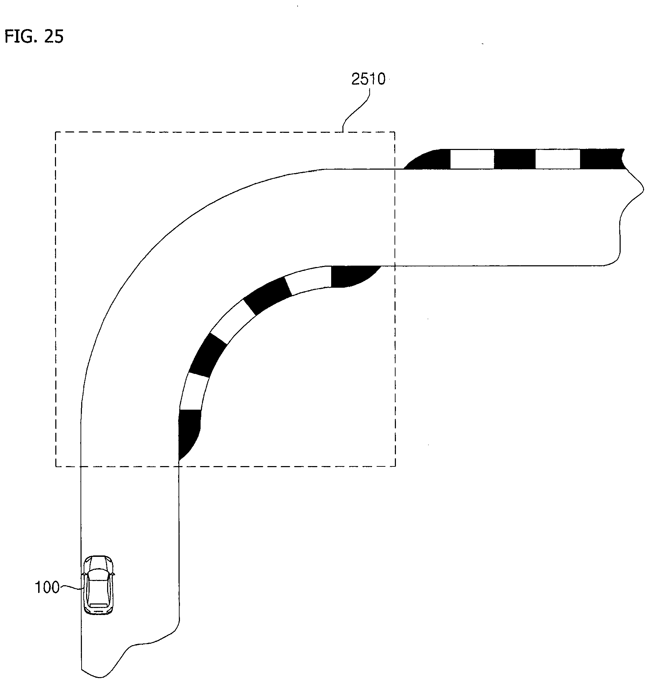

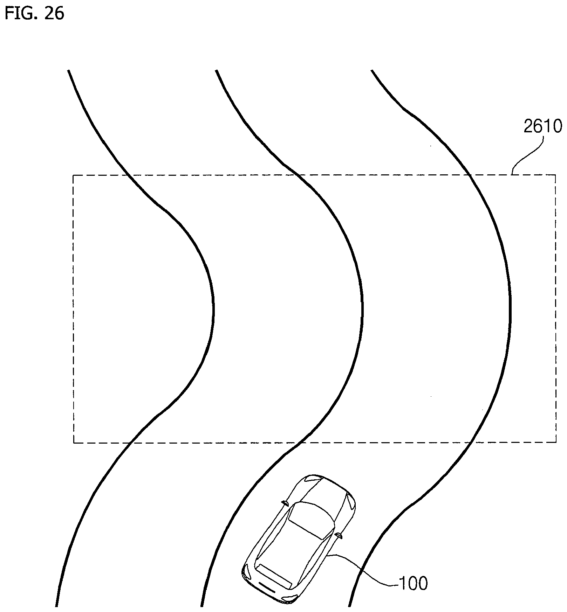

FIGS. 25 and 26 are views for explaining the operation of the driver assistance apparatus shown in FIG. 24.

Referring to FIGS. 24, 25 and 26, the processor 470 may acquire information about a curve in front of the vehicle 100 in the lane (S2410).

The processor 470 may acquire information about the curvature of the curve (S2420). For example, the processor 470 may acquire information about the curvature of the curve by calculating a reciprocal of the radius of an osculating circle contacting the curve.

The processor 470 may determine whether the curvature of the curve exceeds a reference curvature (S2430).

Referring to FIG. 25, the processor 470 may provide a signal for steering to the steering apparatus 152a and provide a signal for one-sided braking to the brake apparatus 153a when the curvature of a curve 2510 exceeds the reference curvature (S2440). The processor 470 may provide the signal for steering and the signal for one-sided braking together.

For example, when the vehicle 100 swerves to the right of the traveling direction while traveling around a curve to the left, the processor 470 may provide a signal for steering to the steering apparatus 152a such that the vehicle 100 is steered to the left of the traveling direction and provide a signal for one-sided braking to the brake apparatus 153a such that higher braking power is applied to the left wheels than the right wheels.

For example, when the vehicle 100 swerves to the left of the traveling direction while traveling around a curve to the right, the processor 470 may provide a signal for steering to the steering apparatus 152a such that the vehicle 100 is steered to the right of the traveling direction and provide a signal for one-sided braking to the brake apparatus 153a such that higher braking power is applied to the right wheels than the left wheels.

Referring to FIG. 26, the processor 470 may provide a signal for steering to the steering apparatus 152a when the curvature of a curve 2610 is less than the reference curvature (S2450).

Steps S2410, S2420 and S2430 may be included in step S640 of FIG. 6 and steps S2440 and S2450 may be included in step S650 of FIG. 6.

Implementations may be implemented as code that may be written to a computer-readable recording medium and may thus be read by a computer. The computer-readable recording medium may be any suitable type of recording device in which data may be stored in a computer-readable manner. Examples of the computer-readable recording medium include an HDD (Hard Disk Drive), an SSD (Solid State Drive), SDD (Silicon Disc Drive), a ROM, a RAM, a CD-ROM, a magnetic tape, a floppy disk, optical data storage, and a carrier wave, e.g., data transmission over the Internet. The computer may include the processor 270 or the controller 170. Although some implementations have been disclosed for illustrative purposes, those skilled in the art will appreciate that various modifications are possible, without departing from the scope of the invention as disclosed in the accompanying claims.

## Claims

1. A driver assistance apparatus (400) for a vehicle (100), the driver assistance apparatus (400) comprising:
a camera (200) configured to photograph an image (FR1, FR2, 530, 550, 810) of surroundings of a vehicle (100);
an interface (180); and
a processor (170) configured to:
detect, based on the image photographed by the camera (200), a lane (528, 538, 548, 642-648, 710) in which the vehicle (100) travels;
acquire braking state information of the vehicle (100);
provide, to a steering apparatus (152), a signal for steering the vehicle (100) or provide, to a brake apparatus (153), a signal for one-sided braking through the interface (180) to maintain the vehicle (100) within the lane (528, 538, 548, 642-648, 710) in which the vehicle (100) travels during a braking of the vehicle (100) based on the acquired braking state information,
**characterized in that** the processor (170) is further configured to:
acquire distance information (611, 621, 631) regarding a distance between the vehicle (100) and an object (730) ahead of the vehicle (100) that is located within the lane (528, 538, 548, 642-648, 710) in which the vehicle (100) travels;
provide the signal for steering to the steering apparatus (152) or provide the signal for one-sided braking to the brake apparatus (153) based on the acquired distance information (730);
provide the signal for one-sided braking to the brake apparatus (153) based on a determination that the distance between the vehicle (100) and the object (730) ahead of the vehicle (100) exceeds a threshold distance; and
provide the signal for steering to the steering apparatus (152) based on a determination that the distance between the vehicle (100) and the object (730) ahead of the vehicle (100) is less than the threshold distance.

2. The driver assistance apparatus (400) of claim 1, wherein the processor (170) is configured to acquire the braking state information based on the image (FR1, FR2, 530, 550, 810) of the surroundings of the vehicle (100) or based on receiving the braking state information through the interface (180).

3. The driver assistance apparatus (400) of claim 1 or 2, wherein the processor (170) is further configured to:
determine a degree of swerving of the vehicle (100) from the lane (528, 538, 548, 642-648, 710) in which the vehicle (100) travels;
acquire position information of the vehicle (100), the position information corresponding to the degree of swerving of the vehicle (100) from the lane (528, 538, 548, 642-648, 710) in which the vehicle (100) travels; and
provide the signal for steering or the signal for one-sided braking based on the acquired position information of the vehicle (100).

4. The driver assistance apparatus (400) of claim 3, wherein the processor (170) is configured to calculate the position information of the vehicle (100) by:
determining a heading of the vehicle (100);
determining an angle between the heading of the vehicle (100) and the left line (711) or the right line (712) of the lane (528, 538, 548, 642-648, 710) in which the vehicle (100) travels; and
calculating the position information of the vehicle (100) based on the angle between the heading of the vehicle (100) and the left line (711) or the right line (712) of the lane (528, 538, 548, 642-648, 710) in which the vehicle (100) travels.

5. The driver assistance apparatus (400) of claim 3, wherein the processor (170) is further configured to:
determine a virtual centerline (720) of the lane (528, 538, 548, 642-648, 710) in which the vehicle (100) travels;
determine a line corresponding to a center of the vehicle (100) in a width direction of the vehicle (100);
determine an angle between the virtual centerline (720) of the lane (528, 538, 548, 642-648, 710) in which the vehicle (100) travels and the line corresponding to the center of the vehicle (100) in the width direction of the vehicle (100); and
calculate the position information of the vehicle (100) based on the angle between the virtual centerline (720) of the lane (528, 538, 548, 642-648, 710) in which the vehicle (100) travels and the line corresponding to the center of the vehicle (100) in the width direction of the vehicle (100), and/or
provide the signal for steering to the steering apparatus (152) or the signal for one-sided braking to the brake apparatus (153) such that the center of the vehicle in the width direction corresponds to the virtual centerline (720) of the lane (528, 538, 548, 642-648, 710) in which the vehicle (100) travels.

6. The driver assistance apparatus (400) of claim 3, wherein the processor (170) is configured to:
determine whether the degree of swerving of the vehicle from the lane (528, 538, 548, 642-648, 710) in which the vehicle (100) travels is less than or exceeds a threshold value; and
if a determination result is that the degree of swerving of the vehicle from the lane (528, 538, 548, 642-648, 710) in which the vehicle (100) travels is less than the threshold value, provide the signal for one-sided braking to the brake apparatus (153), and
if a determination result is that the degree of swerving of the vehicle (100) from the lane (528, 538, 548, 642-648, 710) in which the vehicle (100) travels exceeds the threshold value, provide the signal for steering to the steering apparatus (152).

7. The driver assistance apparatus (400) of one of claims 1 to 6, wherein the processor (170) is further configured to:
acquire information about a speed of the vehicle (100); and
provide the signal for steering to the steering apparatus (152) based on a determination that the speed of the vehicle (100) exceeds a threshold speed; and
provide the signal for one-sided braking to the brake apparatus (153) based on a determination that the speed of the vehicle (!00) is less than the threshold speed.

8. The driver assistance apparatus (400) of one of claims 1 to 7, wherein the processor (170) is further configured to:
acquire information regarding a time to collision (TTC) with an object (730) ahead of the vehicle (100) that is located within the lane (528, 538, 548, 642-648, 710) in which the vehicle (100) travels; and
provide the signal for steering to the steering apparatus (152) or provide the signal for one-sided braking to the brake apparatus (153) based on the acquired information regarding the TTC.

9. The driver assistance apparatus (400) of claim 8, wherein the processor (170) is further configured to:
provide the signal for one-sided braking to the brake apparatus (153) based on a determination that the TTC exceeds the threshold time; and
provide the signal for steering to the steering apparatus (152) based on a determination that the TTC is less than the threshold time.

10. The driver assistance apparatus (400) of one of claims 1 to 9, wherein the processor (170) is further configured to:
receive, from a tire pressure monitoring system (300), TPMS, and through the interface (180), tire pressure information of the vehicle (100); and
provide the signal for one-sided braking to the brake apparatus (153) based on the received tire pressure information of the vehicle (100).

11. The driver assistance apparatus (400) of claim 10, wherein the processor (170) is further configured to:
determine whether an air pressure of a first tire (2310) on a first wheel (1110) of the vehicle (100) is less than an air pressure of a second tire (2320) on a second wheel (1120) of the vehicle (100); and
if a determination result is that the air pressure of the first tire (2310) on the first wheel (1110) of the vehicle (100) is less than the air pressure of the second tire (2320) on the second wheel (1120) of the vehicle (100), provide the signal for one-sided braking to the brake apparatus (153) such that a braking power applied to the first wheel (1110) of the vehicle (100) is less than a braking power applied to the second wheel (1120) of the vehicle (100).

12. The driver assistance apparatus (400) of one of claims 1 to 11, wherein the processor (170) is further configured to:
acquire information regarding a curve (2510, 2610) of the lane (528, 538, 548, 642-648, 710) in which the vehicle (100) travels; and
provide the signal for steering to the steering apparatus (152) or provide the signal for one-sided braking to the brake apparatus (153) based on the acquired information regarding the curve (2510, 2610) of the lane (528, 538, 548, 642-648, 710) in which the vehicle (100) travels.

13. The driver assistance apparatus (400) of claim 12, wherein the processor (170) is further configured to:
acquire information regarding a curvature of the curve (2510, 2610) of the lane (528, 538, 548, 642-648, 710) in which the vehicle (100) travels;
determine whether the curvature of the curve (2510, 2610) is less than or exceeds a threshold curvature; and
if a determination result is that the curvature of the curve (2510, 2610) exceeds the threshold curvature, provide both the signal for steering to the steering apparatus (152) and the signal for one-sided braking to the brake apparatus (153), and
if a determination result is that the curvature of the curve (2510, 2610) is less than the threshold curvature, provide the signal for steering to the steering apparatus (152).

14. The driver assistance apparatus (400) of one of claims 1 to 13, wherein the processor (170) is further configured to:
determine whether a driver intervention event has occurred; and
if a determination result is that the driver intervention event has occurred, stop a supply of the signal for steering to the steering apparatus (152) or stop a supply of the signal for one-sided braking to the brake apparatus (153).

## Patentansprüche

1. Fahrerassistenzvorrichtung (400) für ein Fahrzeug (100), wobei die Fahrerassistenzvorrichtung (400) umfasst:
eine Kamera (200), die dazu eingerichtet ist, ein Bild (FR1, FR2, 530, 550, 810) der Umgebung eines Fahrzeugs (100) aufzunehmen;
eine Schnittstelle (180); und
einen Prozessor (170), der dazu eingerichtet ist:
auf der Grundlage des von der Kamera (200) aufgenommenen Bildes eine Fahrspur (528, 538, 548, 642-648, 710) zu erkennen, in der das Fahrzeug (100) fährt;
Informationen über den Bremszustand des Fahrzeugs zu erfassen (100);
basierend auf den erfassten Bremszustandsinformationen, an eine Lenkeinrichtung (152) ein Signal zum Lenken des Fahrzeugs (100) oder an eine Bremseinrichtung (153) ein Signal für ein einseitiges Bremsen durch die Schnittstelle (180) bereitzustellen, um das Fahrzeug (100) innerhalb der Spur (528, 538, 548, 642-648, 710) zu halten, in der das Fahrzeug (100) während einer Bremsung des Fahrzeugs (100) fährt,
**dadurch gekennzeichnet, dass** der Prozessor (170) ferner dazu eingerichtet ist:
Abstandsinformationen (611, 621, 631) bezüglich eines Abstands zwischen dem Fahrzeug (100) und einem Objekt (730) vor dem Fahrzeug (100), das sich innerhalb der Fahrspur (528, 538, 548, 642-648, 710) befindet, in der das Fahrzeug (100) fährt, zu erfassen;
das Signal zum Lenken an die Lenkeinrichtung (152) oder das Signal zum einseitigen Bremsen an die Bremseinrichtung (153) auf der Grundlage der erfassten Abstandsinformationen (730) bereitzustellen;
das Signal für einseitiges Bremsen an die Bremsvorrichtung (153) bereitzustellen, basierend auf einer Bestimmung, dass der Abstand zwischen dem Fahrzeug (100) und dem Objekt (730) vor dem Fahrzeug (100) einen Schwellenabstand überschreitet; und
das Signal zum Lenken an die Lenkeinrichtung (152) bereitzustellen, basierend auf einer Bestimmung, dass der Abstand zwischen dem Fahrzeug (100) und dem Objekt (730) vor dem Fahrzeug (100) kleiner als der Schwellenabstand ist.

2. Fahrerassistenzvorrichtung (400) gemäß Anspruch 1, wobei der Prozessor (170) dazu eingerichtet ist, die Bremszustandsinformationen auf der Grundlage des Bildes (FR1, FR2, 530, 550, 810) der Umgebung des Fahrzeugs (100) oder auf der Grundlage des Empfangs der Bremszustandsinformationen über die Schnittstelle (180) zu erfassen.

3. Fahrerassistenzvorrichtung (400) gemäß Anspruch 1 oder 2, wobei der Prozessor (170) ferner dazu eingerichtet ist:
einen Grad des Abweichens des Fahrzeugs (100) von der Fahrspur (528, 538, 548, 642-648, 710), in der das Fahrzeug (100) fährt, zu bestimmen;
Positionsinformationen des Fahrzeugs (100) zu erfassen, wobei die Positionsinformationen dem Grad des Abweichens des Fahrzeugs (100) von der Fahrspur (528, 538, 548, 642-648, 710), in der das Fahrzeug (100) fährt, entsprechen; und
das Signal für die Lenkung oder das Signal für einseitiges Bremsen auf der Grundlage der erfassten Positionsinformationen des Fahrzeugs (100) bereitzustellen.

4. Fahrerassistenzvorrichtung (400) gemäß Anspruch 3, wobei der Prozessor (170) dazu eingerichtet ist, die Positionsinformationen des Fahrzeugs (100) zu berechnen durch:
Bestimmen einer Fahrtrichtung des Fahrzeugs (100);
Bestimmen eines Winkels zwischen der Fahrtrichtung des Fahrzeugs (100) und der linken Linie (711) oder der rechten Linie (712) der Fahrspur (528, 538, 548, 642-648, 710), in der das Fahrzeug (100) fährt; und
Berechnen der Positionsinformationen des Fahrzeugs (100) auf der Grundlage des Winkels zwischen der Fahrtrichtung des Fahrzeugs (100) und der linken Linie (711) oder der rechten Linie (712) der Fahrspur (528, 538, 548, 642-648, 710), in der das Fahrzeug (100) fährt.

5. Fahrerassistenzvorrichtung (400) gemäß Anspruch 3, wobei der Prozessor (170) ferner dazu eingerichtet ist:
eine virtuelle Mittellinie (720) der Fahrspur (528, 538, 548, 642-648, 710), in der das Fahrzeug (100) fährt, zu bestimmen;
eine Linie, die einem Mittelpunkt des Fahrzeugs (100) in Richtung der Breite des Fahrzeugs (100) entspricht, zu bestimmen;
einen Winkel zwischen der virtuellen Mittellinie (720) der Fahrspur (528, 538, 548, 642-648, 710), in der das Fahrzeug (100) fährt, und der Linie, die der Mitte des Fahrzeugs (100) in der Breitenrichtung des Fahrzeugs (100) entspricht, zu bestimmen; und
die Positionsinformation des Fahrzeugs (100) auf der Grundlage des Winkels zwischen der virtuellen Mittellinie (720) der Fahrspur (528, 538, 548, 642-648, 710), in der das Fahrzeug (100) fährt, und der Linie, die der Mitte des Fahrzeugs (100) in der Breitenrichtung des Fahrzeugs (100) entspricht, zu berechnen, und/oder
das Signal zum Lenken an die Lenkeinrichtung (152) oder das Signal zum einseitigen Bremsen an die Bremseinrichtung (153) bereitzustellen, so dass die Mitte des Fahrzeugs in der Breitenrichtung der virtuellen Mittellinie (720) der Fahrspur (528, 538, 548, 642-648, 710) entspricht, in der das Fahrzeug (100) fährt.

6. Fahrerassistenzvorrichtung (400) gemäß Anspruch 3, wobei der Prozessor (170) dazu eingerichtet ist:
zu bestimmen, ob der Grad des Abweichens des Fahrzeugs von der Fahrspur (528, 538, 548, 642-648, 710), in der das Fahrzeug (100) fährt, unter oder über einem Schwellenwert liegt; und
wenn ein Bestimmungsergebnis ist, dass der Grad des Abweichens des Fahrzeugs von der Fahrspur (528, 538, 548, 642-648, 710), in der das Fahrzeug (100) fährt, kleiner als der Schwellenwert ist, das Signal für ein einseitiges Bremsen an die Bremsvorrichtung (153) bereitzustellen, und
wenn ein Bestimmungsergebnis ist, dass der Grad des Abweichens des Fahrzeugs (100) von der Fahrspur (528, 538, 548, 642-648, 710), in der das Fahrzeug (100) fährt, den Schwellenwert überschreitet, das Signal zum Lenken an die Lenkeinrichtung (152) bereitzustellen.

7. Fahrerassistenzvorrichtung (400) gemäß einem der Ansprüche 1 bis 6, wobei der Prozessor (170) ferner dazu eingerichtet ist:
Informationen über eine Geschwindigkeit des Fahrzeugs (100) zu erfassen; und
das Signal zum Lenken an die Lenkeinrichtung (152) auf der Grundlage einer Bestimmung bereitzustellen, dass die Geschwindigkeit des Fahrzeugs (100) eine Schwellengeschwindigkeit überschreitet; und
das Signal für einseitiges Bremsen an die Bremsvorrichtung (153) auf der Grundlage einer Bestimmung bereitzustellen, dass die Geschwindigkeit des Fahrzeugs (100) kleiner als die Schwellengeschwindigkeit ist.

8. Fahrerassistenzvorrichtung (400) gemäß einem der Ansprüche 1 bis 7, wobei der Prozessor (170) ferner dazu eingerichtet ist:
Informationen bezüglich einer Zeit bis zur Kollision (TTC - time to collision) mit einem Objekt (730) vor dem Fahrzeug (100), das sich innerhalb der Fahrspur (528, 538, 548, 642-648, 710) befindet, in der das Fahrzeug (100) fährt, zu erfassen; und
das Signal zum Lenken an die Lenkeinrichtung (152) oder das Signal zum einseitigen Bremsen an die Bremseinrichtung (153) auf der Grundlage der erfassten Informationen bezüglich der TTC bereitzustellen.

9. Fahrerassistenzvorrichtung (400) gemäß Anspruch 8, wobei der Prozessor (170) ferner dazu eingerichtet ist:
das Signal für einseitiges Bremsen an die Bremsvorrichtung (153), basierend auf der Feststellung, dass die TTC die Schwellenzeit überschreitet, bereitzustellen; und
das Signal zum Lenken an die Lenkeinrichtung (152), basierend auf der Feststellung, dass die TTC kleiner als die Schwellenzeit ist, bereitzustellen.

10. Fahrerassistenzvorrichtung (400) gemäß einem der Ansprüche 1 bis 9, wobei der Prozessor (170) ferner dazu eingerichtet ist:
von einem Reifendrucküberwachungssystem (300), TPMS, und über die Schnittstelle (180) Reifendruckinformationen des Fahrzeugs (100) zu erhalten; und
das Signal für einseitiges Bremsen an die Bremsvorrichtung (153) auf der Grundlage der erhaltenen Reifendruckinformationen des Fahrzeugs (100) bereitzustellen.

11. Fahrerassistenzvorrichtung (400) gemäß Anspruch 10, wobei der Prozessor (170) ferner dazu eingerichtet ist:
zu bestimmen, ob ein Luftdruck eines ersten Reifens (2310) an einem ersten Rad (1110) des Fahrzeugs (100) geringer ist als ein Luftdruck eines zweiten Reifens (2320) an einem zweiten Rad (1120) des Fahrzeugs (100); und
wenn ein Bestimmungsergebnis ist, dass der Luftdruck des ersten Reifens (2310) an dem ersten Rad (1110) des Fahrzeugs (100) geringer ist als der Luftdruck des zweiten Reifens (2320) an dem zweiten Rad (1120) des Fahrzeugs (100), das Signal für einseitiges Bremsen an die Bremsvorrichtung (153) bereitzustellen, so dass eine auf das erste Rad (1110) des Fahrzeugs (100) ausgeübte Bremskraft geringer ist als eine auf das zweite Rad (1120) des Fahrzeugs (100) ausgeübte Bremskraft.

12. Fahrerassistenzvorrichtung (400) gemäß einem der Ansprüche 1 bis 11, wobei der Prozessor (170) ferner dazu eingerichtet ist:
Informationen bezüglich einer Kurve (2510, 2610) der Fahrspur (528, 538, 548, 642-648, 710), in der das Fahrzeug (100) fährt, zu erfassen; und
das Signal zum Lenken an die Lenkeinrichtung (152) oder das Signal zum einseitigen Bremsen an die Bremseinrichtung (153), basierend auf den erfassten Informationen bezüglich der Kurve (2510, 2610) der Fahrspur (528, 538, 548, 642-648, 710), in der das Fahrzeug (100) fährt, bereitzustellen.

13. Fahrerassistenzvorrichtung (400) gemäß Anspruch 12, wobei der Prozessor (170) ferner dazu eingerichtet ist:
Informationen über eine Krümmung der Kurve (2510, 2610) der Fahrspur (528, 538, 548, 642-648, 710), in der das Fahrzeug (100) fährt, zu erfassen;
zu bestimmen, ob die Krümmung der Kurve (2510, 2610) unter oder über einer Schwellenwertkrümmung liegt; und
wenn ein Bestimmungsergebnis ist, dass die Krümmung der Kurve (2510, 2610) die Schwellenwertkrümmung überschreitet, sowohl das Signal zum Lenken an die Lenkeinrichtung (152) als auch das Signal zum einseitigen Bremsen an die Bremseinrichtung (153) bereitzustellen, und
wenn ein Bestimmungsergebnis ist, dass die Krümmung der Kurve (2510, 2610) kleiner als die Schwellenwertkrümmung ist, das Signal zum Lenken an die Lenkeinrichtung (152) bereitzustellen.

14. Fahrerassistenzvorrichtung (400) gemäß einem der Ansprüche 1 bis 13, wobei der Prozessor (170) ferner dazu eingerichtet ist:
zu bestimmen, ob ein Fahrerinterventionsereignis eingetreten ist; und
wenn ein Bestimmungsergebnis ist, dass das Fahrerinterventionsereignis eingetreten ist, eine Zufuhr des Signals für die Lenkung an die Lenkeinrichtung (152) oder eine Zufuhr des Signals für einseitiges Bremsen an die Bremseinrichtung (153) zu stoppen.

## Revendications

1. Appareil (400) d'aide à la conduite pour un véhicule (100), l'appareil (400) d'aide à la conduite comprenant :
une caméra (200) configurée pour photographier une image (FR1, FR2, 530, 550, 810) des alentours d'un véhicule (100) ;
une interface (180) ; et
un processeur (170) configuré pour :
détecter, sur la base de l'image photographiée par la caméra (200), une voie (528, 538, 548, 642-648, 710) dans laquelle le véhicule (100) se déplace ;
acquérir une information d'état de freinage du véhicule (100) ;
fournir, à un appareil de direction (152), un signal pour diriger le véhicule (100) ou fournir, à un appareil de freinage (153), un signal pour un freinage unilatéral par l'intermédiaire de l'interface (180) pour maintenir le véhicule (100) à l'intérieur de la voie (528, 538, 548, 642-648, 710) dans laquelle le véhicule (100) se déplace lors d'un freinage du véhicule (100) sur la base de l'information d'état de freinage acquise,
**caractérisé en ce que** le processeur (170) est en outre configuré pour :
acquérir une information de distance (611, 621, 631) relative à une distance entre le véhicule (100) et un objet (730) en avant du véhicule (100) qui est localisé à l'intérieur de la voie (528, 538, 548, 642-648, 710) dans laquelle le véhicule (100) se déplace ;
fournir le signal pour diriger à l'appareil de direction (152) ou fournir le signal pour un freinage unilatéral à l'appareil de freinage (153) sur la base de l'information de distance (730) acquise ;
fournir le signal pour un freinage unilatéral à l'appareil de freinage (153) sur la base d'une détermination que la distance entre le véhicule (100) et l'objet (730) en avant du véhicule (100) excède une distance de seuil ; et
fournir le signal pour diriger à l'appareil de direction (152) sur la base d'une détermination que la distance entre le véhicule (100) et l'objet (730) en avant du véhicule (100) est inférieure à la distance de seuil.

2. Appareil (400) d'aide à la conduite selon la revendication 1, dans lequel le processeur (170) est configuré pour acquérir l'information d'état de freinage sur la base de l'image (FR1, FR2, 530, 550, 810) des alentours du véhicule (100) ou sur la base de la réception de l'information d'état de freinage par l'intermédiaire de l'interface (180).

3. Appareil (400) d'aide à la conduite selon la revendication 1 ou 2, dans lequel le processeur (170) est en outre configuré pour :
déterminer un degré d'embardée du véhicule (100) depuis la voie (528, 538, 548, 642-648, 710) dans laquelle le véhicule (100) se déplace ;
acquérir une information de position du véhicule (100), l'information de position correspondant au degré d'embardée du véhicule (100) depuis la voie (528, 538, 548, 642-648, 710) dans laquelle le véhicule (100) se déplace ; et
fournir le signal pour diriger ou le signal pour un freinage unilatéral sur la base de l'information de position acquise du véhicule (100).

4. Appareil (400) d'aide à la conduite selon la revendication 3, dans lequel le processeur (170) est configuré pour calculer l'information de position du véhicule (100) en :
déterminant un sens de la marche du véhicule (100) ;
déterminant un angle entre le sens de la marche du véhicule (100) et la ligne gauche (711) ou la ligne droite (712) de la voie (528, 538, 548, 642-648, 710) dans laquelle le véhicule (100) se déplace ; et
calculant l'information de position du véhicule (100) sur la base de l'angle entre le sens de la marche du véhicule (100) et la ligne gauche (711) ou la ligne droite (712) de la voie (528, 538, 548, 642-648, 710) dans laquelle le véhicule (100) se déplace.

5. Appareil (400) d'aide à la conduite selon la revendication 3, dans lequel le processeur (170) est en outre configuré pour :
déterminer une ligne centrale virtuelle (720) de la voie (528, 538, 548, 642-648, 710) dans laquelle le véhicule (100) se déplace ;
déterminer une ligne correspondant à un centre du véhicule (100) dans un sens de la largeur du véhicule (100) ;
déterminer un angle entre la ligne centrale virtuelle (720) de la voie (528, 538, 548, 642-648, 710) dans laquelle le véhicule (100) se déplace et la ligne correspondant au centre du véhicule (100) dans le sens de la largeur du véhicule (100) ; et
calculer l'information de position du véhicule (100) sur la base de l'angle entre la ligne centrale virtuelle (720) de la voie (528, 538, 548, 642-648, 710) dans laquelle le véhicule (100) se déplace et la ligne correspondant au centre du véhicule (100) dans le sens de la largeur du véhicule (100), et/ou
fournir le signal pour diriger à l'appareil de direction (152) ou le signal pour un freinage unilatéral à l'appareil de freinage (153) de façon à ce que le centre du véhicule dans le sens de la largeur corresponde à la ligne centrale virtuelle (720) de la voie (528, 538, 548, 642-648, 710) dans laquelle le véhicule (100) se déplace.

6. Appareil (400) d'aide à la conduite selon la revendication 3, dans lequel le processeur (170) est configuré pour :
déterminer si le degré d'embardée du véhicule depuis la voie (528, 538, 548, 642-648, 710) dans laquelle le véhicule (100) se déplace est inférieur à ou excède une valeur de seuil ; et
si un résultat de détermination est que le degré d'embardée du véhicule depuis la voie (528, 538, 548, 642-648, 710) dans laquelle le véhicule (100) se déplace est inférieur à la valeur de seuil, fournir le signal pour un freinage unilatéral à l'appareil de freinage (153), et
si un résultat de détermination est que le degré d'embardée du véhicule depuis la voie (528, 538, 548, 642-648, 710) dans laquelle le véhicule (100) se déplace excède la valeur de seuil, fournir le signal pour diriger à l'appareil de direction (152).

7. Appareil (400) d'aide à la conduite selon l'une des revendications 1 à 6, dans lequel le processeur (170) est en outre configuré pour :
acquérir une information relative à une vitesse du véhicule (100) ; et
fournir le signal pour diriger à l'appareil de direction (152) sur la base d'une détermination que la vitesse du véhicule (100) excède une vitesse de seuil ; et
fournir le signal pour un freinage unilatéral à l'appareil de freinage (153) sur la base d'une détermination que la vitesse du véhicule (100) est inférieure à la vitesse de seuil.

8. Appareil (400) d'aide à la conduite selon l'une des revendications 1 à 7, dans lequel le processeur (170) est en outre configuré pour :
acquérir une information relative à un temps restant avant collision (TTC) avec un objet (730) en avant du véhicule (100) qui est localisé à l'intérieur de la voie (528, 538, 548, 642-648, 710) dans laquelle le véhicule (100) se déplace ; et
fournir le signal pour diriger à l'appareil de direction (152) ou fournir le signal pour un freinage unilatéral à l'appareil de freinage (153) sur la base de l'information acquise relative au TTC.

9. Appareil (400) d'aide à la conduite selon la revendication 8, dans lequel le processeur (170) est en outre configuré pour :
fournir le signal pour un freinage unilatéral à l'appareil de freinage (153) sur la base d'une détermination que le TTC excède le temps de seuil ; et
fournir le signal pour diriger à l'appareil de direction (152) sur la base d'une détermination que le TTC est inférieur au temps de seuil.

10. Appareil (400) d'aide à la conduite selon l'une des revendications 1 à 9, dans lequel le processeur (170) est en outre configuré pour :
recevoir, d'un système (300) de surveillance de pression de pneumatiques, TPMS, et par l'intermédiaire de l'interface (180), une information de pression de pneumatiques du véhicule (100) ; et
fournir le signal pour un freinage unilatéral à l'appareil de freinage (153) sur la base de l'information de pression de pneumatiques reçue du véhicule (100).

11. Appareil (400) d'aide à la conduite selon la revendication 10, dans lequel le processeur (170) est en outre configuré pour :
déterminer si une pression d'air d'un premier pneumatique (2310) sur une première roue (1110) du véhicule (100) est inférieure à une pression d'air d'un deuxième pneumatique (2320) sur une deuxième roue (1120) du véhicule (100) ; et
si un résultat de détermination est que la pression d'air du premier pneumatique (2310) sur la première roue (1110) du véhicule (100) est inférieure à la pression d'air du deuxième pneumatique (2320) sur la deuxième roue (1120) du véhicule (100), fournir le signal pour un freinage unilatéral à l'appareil de freinage (153) de manière à ce qu'une force de freinage appliquée à la première roue (1110) du véhicule (100) soit inférieure à une force de freinage appliquée à la deuxième roue (1120) du véhicule (100).

12. Appareil (400) d'aide à la conduite selon l'une des revendications 1 à 11, dans lequel le processeur (170) est en outre configuré pour :
acquérir une information relative à une courbe (2510, 2610) de la voie (528, 538, 548, 642-648, 710) dans laquelle le véhicule (100) se déplace ; et
fournir le signal pour diriger à l'appareil de direction (152) ou fournir le signal pour un freinage unilatéral à l'appareil de freinage (153) sur la base de l'information acquise relative à la courbe (2510, 2610) de la voie (528, 538, 548, 642-648, 710) dans laquelle le véhicule (100) se déplace.

13. Appareil (400) d'aide à la conduite selon la revendication 12, dans lequel le processeur (170) est en outre configuré pour :
acquérir une information relative à une courbure de la courbe (2510, 2610) de la voie (528, 538, 548, 642-648, 710) dans laquelle le véhicule (100) se déplace ;
déterminer si la courbure de la courbe (2510, 2610) est inférieure à ou excède une courbure de seuil ; et
si un résultat de détermination est que la courbure de la courbe (2510, 2610) excède la courbure de seuil, fournir les deux du signal pour diriger à l'appareil de direction (152) et du signal pour un freinage unilatéral à l'appareil de freinage (153), et
si un résultat de détermination est que la courbure de la courbe (2510, 2610) est inférieure à la courbure de seuil, fournir le signal pour diriger à l'appareil de direction (152).

14. Appareil (400) d'aide à la conduite selon l'une des revendications 1 à 13, dans lequel le processeur (170) est en outre configuré pour :
déterminer si un événement d'intervention de conducteur est survenu ; et
si un résultat de détermination est que l'événement d'intervention de conducteur est survenu, stopper une fourniture du signal pour diriger à l'appareil de direction (152) ou stopper une fourniture du signal pour un freinage unilatéral à l'appareil de freinage (153).
